# EUROPEAN PATENT APPLICATION

(11) **EP 4 844 903 A1**
(43) Date of publication of application: **25.11.2026**
(21) Application number: 25742042.2
(22) Date of filing: 17.01.2025
(51) Int. Cl.: H01M 50/129, H01G 11/78, H01G 11/80, H01G 11/84, H01M 50/15, H01M 50/16, H01M 50/103, H01M 50/105, H01M 50/119, H01M 50/121, H01M 50/131, H01M 50/164

(54) **POWER STORAGE DEVICE AND METHOD FOR MANUFACTURING SAME, AND OUTER PACKAGE MATERIAL FOR POWER STORAGE DEVICE AND METHOD FOR MANUFACTURING SAME**

(30) Priority: 18.01.2024 JP 2024006433; 18.01.2024 JP 2024006434
(71) Applicant: Dai Nippon Printing Co., Ltd., Tokyo 162-8001 (JP)
(72) Inventor: SHIMADA, Shinya, Tokyo 162-8001 (JP); KANAZAWA, Sayoko, Tokyo 162-8001 (JP); OKADA, Emiko, Tokyo 162-8001 (JP)
(74) Representative: Müller-Boré & Partner Patentanwälte PartG mbB
(86) International application number: PCT/JP2025/001473
(87) International publication number: WO 2025/154817

(57) **Abstract**

An electrical storage device comprising an electrode assembly and an outer packaging that seals the electrode assembly, wherein the outer packaging comprises an outer package film that wraps the electrode assembly and a lid that seals the electrode assembly together with the outer package film, wherein the outer package film comprises a laminate including at least a barrier layer and a heat-sealable resin layer, wherein, in the barrier layer, a ratio (R1/R2) of area average grain size R1 (µm) to area average grain size R2 (µm) is 55% or more, wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed.

## Description

### Technical Field

The present disclosure relates to an electrical storage device and a method for manufacturing the electrical storage device, and an electrical storage device outer packaging material and a method for manufacturing the electrical storage device outer packaging material.

### Background Art

Various types of electrical storage devices have been heretofore developed. In every electrical storage device, an outer packaging material is an essential member for sealing an electrical storage device element including electrodes, an electrolyte, and the like. Metallic outer packaging materials have heretofore been widely used as outer package films.

On the other hand, in recent years, along with improvements in the performance of electric cars, hybrid electric cars, personal computers, cameras, mobile phones, and the like, electrical storage devices have been required to be diversified in shape and also to be thinner and lighter weight. However, the widely used metallic outer package films are disadvantageous in that they have difficulty in keeping up with the diversification of shapes and are limited in weight reduction.

Thus, a film-shaped laminate in which a base material layer/a barrier layer/a heat-sealable resin layer are laminated in this order has been recently proposed as an outer package film that can be readily processed into various shapes and can achieve a thickness reduction and a weight reduction (see, for example, Patent Literature 1).

Patent Literature 2 discloses an example of an electrical storage device. This electrical storage device comprises an electrode assembly and an outer packaging that seals the electrode assembly. The outer packaging comprises an outer package film that wraps the electrode assembly and a lid that is joined to the outer package film. This electrical storage device is manufactured, for example, by housing the electrode assembly inside the outer package film formed in a tubular shape and closing the openings of the tubular outer package film with the lids. Side surfaces of the lids and the outer package film are joined by heat sealing, for example.

### Citation List

### Patent Literature

Patent Literature 1: JP-A-2008-287971
Patent Literature 2: JP-A-2022-123686

### Summary of Invention

### Technical Problem

The outer packaging comprising the outer package film (electrical storage device outer packaging material) that wraps the electrode assembly and the lid joined to the outer package film, as disclosed in Patent Literature 2, is useful as, for example, an outer packaging for a large electrical storage device.

This outer packaging has a seal portion (joint portion) between the outer package film (electrical storage device outer packaging material) and the lid. As a result of research by the inventors of the present disclosure, they found a novel problem; i.e., a crack is formed in the seal portion of the outer package film (electrical storage device outer packaging material) when the electrical storage device is repeatedly exposed to temperature changes between high and low temperatures.

Under such circumstances, a main object of the present disclosure is to provide an electrical storage device that employs an outer packaging including an outer package film (electrical storage device outer packaging material) that wraps an electrode assembly, and a lid, wherein formation of a crack in a seal portion of the outer package film to the lid is inhibited when the electrical storage device is repeatedly exposed to temperature changes between high and low temperatures.

Another object of the present disclosure is to provide an electrical storage device outer packaging material wherein, in an electrical storage device that employs an outer packaging including the electrical storage device outer packaging material that wraps an electrode assembly, and a lid, formation of a crack in a seal portion of the electrical storage device outer packaging material to the lid is inhibited when the electrical storage device is repeatedly exposed to temperature changes between high and low temperatures.

### Solution to Problem

The inventors of the present disclosure conducted extensive research to solve the aforementioned problem. As a result, they found that, in an electrical storage device comprising an electrode assembly and an outer packaging that seals the electrode assembly, wherein the outer packaging comprises an outer package film that wraps the electrode assembly and a lid that seals the electrode assembly together with the outer package film, wherein the outer package film comprises a laminate including at least a barrier layer and a heat-sealable resin layer, and wherein, in the barrier layer, the below-described ratio (R1/R2) of area average grain size R1 (µm) to area average grain size R2 (µm) is 55% or more, formation of a crack in a seal portion of the outer package film to the lid is inhibited when the electrical storage device is repeatedly exposed to temperature changes between high and low temperatures.

The present disclosure has been completed as a result of further research based on these findings. In summary, the present disclosure provides an aspect of the invention as set forth below:
An electrical storage device comprising:
an electrode assembly; and
an outer packaging that seals the electrode assembly,
wherein the outer packaging comprises:
   an outer package film that wraps the electrode assembly; and
   a lid that seals the electrode assembly together with the outer package film,
   wherein the outer package film comprises a laminate including at least a barrier layer and a heat-sealable resin layer,
   wherein, in the barrier layer, a ratio (R1/R2) of area average grain size R1 (µm) to area average grain size R2 (µm) is 55% or more,
   wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and
   wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed.

The inventors of the present disclosure further conducted extensive research to solve the aforementioned problem. As a result, they found that, in an electrical storage device outer packaging material comprising a laminate including at least a barrier layer and a heat-sealable resin layer, wherein, in the barrier layer, the below-described ratio (R1/R2) of area average grain size R1 (µm) to area average grain size R2 (µm) is 55% or more, formation of a crack in a seal portion of the electrical storage device outer packaging material to the lid is inhibited when the electrical storage device is repeatedly exposed to temperature changes between high and low temperatures.

The present disclosure has been completed as a result of further research based on these findings. In summary, the present disclosure also provides an aspect of the invention as set forth below:
An electrical storage device outer packaging material comprising a laminate including at least a barrier layer and a heat-sealable resin layer,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed.

### Advantageous Effects of Invention

According to the present disclosure, it is possible to provide an electrical storage device that employs an outer packaging including an outer package film that wraps an electrode assembly, and a lid, wherein formation of a crack in a seal portion of the outer package film to the lid (more specifically, formation of a crack in the barrier layer) is inhibited when the electrical storage device is repeatedly exposed to temperature changes between high and low temperatures. Furthermore, according to the present disclosure, it is also possible to provide a method for manufacturing the electrical storage device.

Furthermore, according to the present disclosure, it is also possible to provide an electrical storage device outer packaging material wherein, in an electrical storage device that employs an outer packaging including the electrical storage device outer packaging material that wraps an electrode assembly, and a lid, formation of a crack in a seal portion of the electrical storage device outer packaging material to the lid (more specifically, formation of a crack in the barrier layer) is inhibited when the electrical storage device is repeatedly exposed to temperature changes between high and low temperatures. Furthermore, according to the present disclosure, it is also possible to provide a method for manufacturing the electrical storage device outer packaging material, and an electrical storage device that employs the electrical storage device outer packaging material.

### Brief Description of Drawings

Fig. 1 is a perspective view showing one example of the electrical storage device of the present disclosure.
FIG. 2 is a cross-sectional view taken along line A-A of FIG. 1.
FIG. 3 is a schematic view showing one example of the lid of the present disclosure.
FIG. 4 is a schematic view showing one example of the cross-sectional structure of the outer package film of the present disclosure.
FIG. 5 is a schematic view showing one example of the cross-sectional structure of the electrical storage device outer packaging material of the present disclosure.
FIG. 6 is a schematic view showing one example of the cross-sectional structure of the electrical storage device outer packaging material of the present disclosure.
FIG. 7 is a schematic view showing one example of the cross-sectional structure of the electrical storage device outer packaging material of the present disclosure.
FIG. 8 is a schematic view showing one example of the cross-sectional structure of the electrical storage device outer packaging material of the present disclosure.
FIG. 9 is a schematic view for explaining a method of housing an electrical storage device element in a packaging formed of the electrical storage device outer packaging material of the present disclosure.
FIG. 10 is a perspective view showing one example of the electrical storage device of the present disclosure that employs the electrical storage device outer packaging material of the present disclosure.
FIG. 11 is a cross-sectional view taken along line A-A of FIG. 10.
FIG. 12 is a schematic view showing one example of the lid of the present disclosure.

### Description of Embodiments

In an electrical storage device of the present disclosure, an outer package film comprises an electrode assembly and an outer packaging that seals the electrode assembly. The outer packaging comprises an outer package film that wraps the electrode assembly and a lid that seals the electrode assembly together with the outer package film (electrical storage device outer packaging material). The outer package film comprises a laminate including at least a barrier layer and a heat-sealable resin layer. In the barrier layer, a ratio (R1/R2) of area average grain size R1 (µm) to area average grain size R2 (µm) is 55% or more. The area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer (i.e., perpendicular from a surface of the barrier layer), at a position where the heat-sealable resin layer of the outer package film is heat-sealed to the lid. The area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed. The electrical storage device of the present disclosure has the above-described features, which inhibit the formation of a crack in a seal portion of the outer package film to the lid.

Furthermore, an electrical storage device outer packaging material of the present disclosure comprises a laminate including at least a barrier layer and a heat-sealable resin layer in this order, wherein, in the barrier layer, a ratio (R1/R2) of area average grain size R1 (µm) to area average grain size R2 (µm) is 55% or more, wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed. The electrical storage device outer packaging material of the present disclosure has the above-described features, which inhibit the formation of a crack in a seal portion of the electrical storage device outer packaging material to the lid.

The electrical storage device and the outer package film (hereinafter also referred to as the electrical storage device outer packaging material) of the present disclosure will be hereinafter described in detail. In the present disclosure, a numerical range indicated by the term "A to B" means "A or more" and "B or less". For example, the expression of "2 to 15 mm" means 2 mm or more and 15 mm or less. In numerical ranges serially described in the present disclosure, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range. In numerical ranges described in the present disclosure, an upper limit value or a lower limit value described for a numerical range may be replaced by a value shown in an example.

In the exterior material for electrical storage devices, Machine Direction (MD) and Transverse Direction (TD) in the process for manufacturing thereof can be discriminated from each other for a barrier layer 52 and a barrier layer 3 described later. For example, when the barrier layer 52 includes a metal foil such as an aluminum alloy foil or a stainless steel foil, linear streaks called rolling indentations are formed on the surface of the metal foil in the rolling direction (RD) of the metal foil. Since the rolling indentations extend along the rolling direction, the rolling direction of the metal foil can be known by observing the surface of the metal foil. In the process for manufacturing of the laminate, the MD of the laminate and the RD of the metal foil normally coincide with each other, and therefore by observing the surface of the metal foil of the laminate to identify the rolling direction (RD) of the metal foil, the MD of the laminate can be identified. Since the TD of the laminate is perpendicular to the MD of the laminate, the TD of the laminate can be identified.

When the MD of the outer package film cannot be identified by the rolling marks on the metal foil such as an aluminum alloy foil or a stainless steel foil, the MD can be identified using the following method. One method of identifying the MD of the outer package film is to examine a sea-island structure by observing cross sections of the heat-sealable resin layer of the outer package film with an electron microscope. In this method, the MD can be determined as the direction parallel to a cross section having the maximum average diameter of island shapes in the direction perpendicular to the thickness direction of the heat-sealable resin layer. Specifically, the sea-island structure is examined by observing an electron microscope photograph for each of a cross section in the length direction of the heat-sealable resin layer and cross sections (a total of 10 cross sections) obtained while varying the angle by 10 degrees from the direction parallel to the cross section in the length direction to the direction perpendicular to the cross section in the length direction. Subsequently, for each cross section, the shape of each individual island is observed. In the shape of each individual island, the straight-line distance connecting the leftmost end in the direction perpendicular to the thickness direction of the heat-sealable resin layer and the rightmost end in the perpendicular direction is defined as the diameter y. For each cross section, the average of the top 20 diameters y in decreasing order of the diameter y of the island shape is calculated. The MD is determined as the direction parallel to a cross section having the highest average of the diameter y of the island shape.

### <1-1. Structure of Electrical Storage Device>

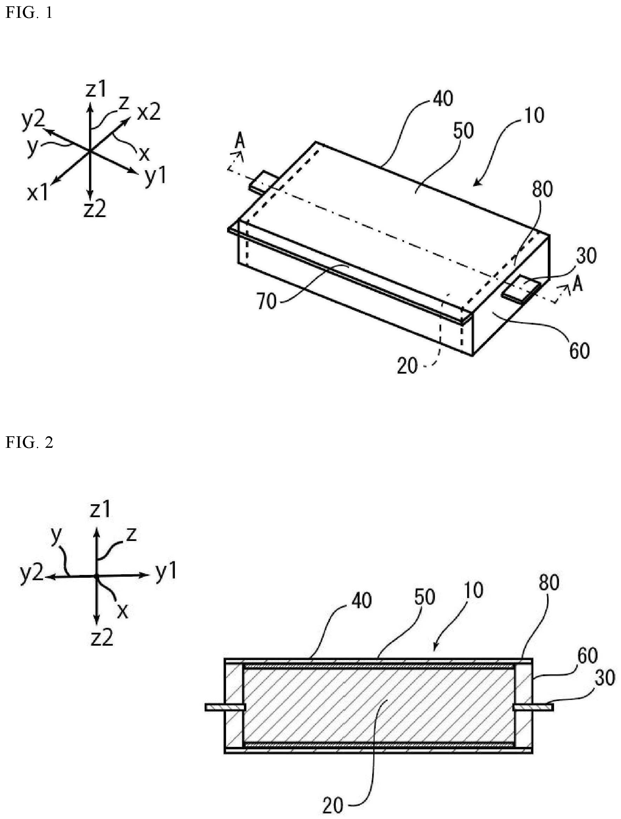

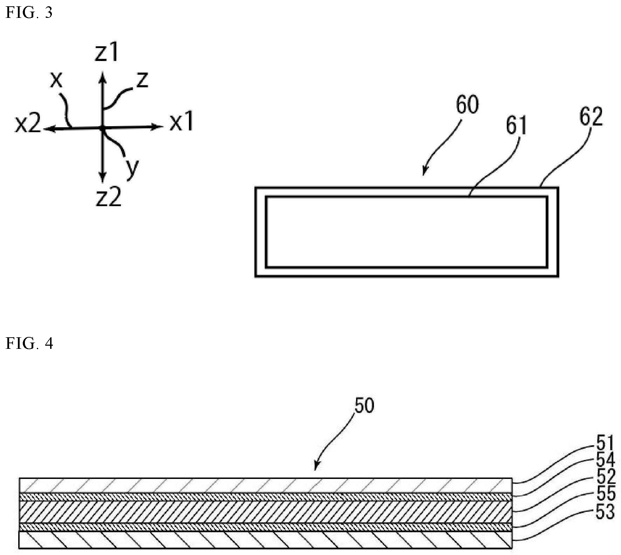

FIG. 1 is a perspective view schematically showing an electrical storage device 10. FIG. 2 is a cross-sectional view taken along line A-A of FIG. 1. FIG. 3 is a schematic view showing one example of a lid 60. FIG. 4 is a cross-sectional view showing one example of the laminated structure of an outer package film 50 included in the electrical storage device 10 of FIG. 1. In FIGS. 1 to 3, the direction of arrow z (z1 and z2 directions) indicates the thickness direction of the electrical storage device 10, the direction of arrow x (x1 and x2 directions) indicates the width direction of the electrical storage device 10, and the direction of arrow y (y1 and y2 directions) indicates the depth direction of the electrical storage device 10. The directions indicated by the arrows x, y, and z are the same in the subsequent drawings.

The electrical storage device 10 includes an electrode assembly 20, electrode terminals 30, and an outer packaging 40. The electrode assembly 20 includes electrodes (a positive electrode and a negative electrode), a separator, and the like constituting an electrical storage member, such as, for example, a lithium ion battery, a capacitor, an all-solid-state battery, a semi-solid-state battery, a quasi-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or a condenser. In the present disclosure, the electrode assembly 20 has, for example, a substantially cuboid shape. The "substantially cuboid" includes not only a perfect cuboid but also, for example, a solid that can be regarded as a cuboid by modifying the shape of a portion of the outer surface. The electrode assembly 20 may have, for example, a cylindrical shape or a polygonal prism shape.

The electrical storage device 10 in FIGS. 1 and 2 includes two electrode terminals 30. The electrode terminals 30 are metal terminals used for input and output of electric power to and from the electrode assembly 20. One end of each electrode terminal 30 is electrically connected to an electrode (a positive or negative electrode) included in the electrode assembly 20. For example, the other end of the electrode terminal 30 protrudes outside from an edge of the outer packaging 40. As long as the electrode terminal 30 can input and output electric power to and from the electrode assembly 20, the electrode terminal 30 may not protrude from the outer packaging 40, for example. For example, when the below-described lid 60 contains a conductive material, the lid 60 may also serve as the electrode terminal 30. In this case, the lid 60 that serves as an electrode terminal may or may not protrude from the outer packaging 40.

Examples of metal materials constituting the electrode terminals 30 include aluminum, nickel, and copper. For example, when the electrode assembly 20 is a lithium ion battery, the electrode terminal 30 connected to the positive electrode is typically formed of aluminum or the like, and the electrode terminal 30 connected to the negative electrode is typically formed of copper, nickel, or the like. The outermost layer of the electrode assembly 20 may not necessarily be an electrode, and may be, for example, a protective tape or a separator. The outer shape of the electrode assembly 20 is, for example, cuboid.

The outer packaging 40 seals the electrode assembly 20. The outer packaging 40 includes the outer package film 50 and the lids 60. The outer package film 50 wraps the electrode assembly 20. In FIGS. 1 and 2, the outer package film 50 is wound around the electrode assembly 20. The lids 60 are disposed on sides of the electrode assembly 20 in the y direction. In another example, the electrode assembly 20 may be housed inside the outer package film 50 that is formed in a tubular shape so that openings are formed at both ends in the y direction, and the openings may be closed with the lids 60. In still another example, the electrode assembly 20 connected to the lids 60 may be housed inside the outer package film 50 that is formed in a tubular shape so that openings are formed, and the openings may be closed with the lids 60.

The outer packaging 40 has a pair of main surfaces and a pair of side surfaces formed by the outer package film 50. In FIGS. 1 and 2, the pair of main surfaces have substantially the same size. Likewise, the pair of side surfaces have substantially the same size. Each of the pair of main surfaces has an area larger than that of each of the pair of side surfaces. The pair of lids 60 are disposed on the respective sides of the electrode assembly 20 so as to close the pair of openings. In the present disclosure, the main surfaces and the side surfaces are the surfaces of the outer packaging 40 excluding the lids 60.

For example, there is a method in which a housing portion (recess) for housing the electrode assembly 20 is formed in the outer package film 50 by cold molding. However, forming a deep housing portion by this method is not necessarily easy. Trying to form a deep (for example, a molding depth of 15 mm) housing portion (recess) by cold molding may cause a pinhole or a crack to form in the outer package film 50, increasing the possibility of lowering the battery performance. In contrast, the outer packaging 40 seals the electrode assembly 20 by winding the outer package film 50 around the electrode assembly 20, so that the electrode assembly 20 can be easily sealed regardless of the thickness of the electrode assembly 20. For reducing the dead space between the electrode assembly 20 and the outer package film 50 in order to improve the volume energy density of the electrical storage device 10, the outer package film 50 is preferably wound to be in contact with an outer surface of the electrode assembly 20. Also considering that in an all-solid-state battery, a high pressure needs to be uniformly applied from an outer surface of the battery to achieve battery performance, any space between the electrode assembly 20 and the outer package film 50 needs to be eliminated; therefore, the outer package film 50 is preferably wound around the electrode assembly 20 to be in contact with the outer surface of the electrode assembly 20. When winding the outer package film 50 around the electrode assembly 20, the outer package film 50 may be wound in a single layer only, or a plurality of layers. In addition to the preferred embodiment in which the facing surfaces of the outer package film 50 are heat-sealed, an embodiment in which an outer surface and an inner surface of the outer package film 50 are heat-sealed is also preferred.

As shown in FIG. 4, the outer package film 50 is a laminate (laminated film) including at least a barrier layer 52 and a heat-sealable resin layer 53. Details of each layer included in the outer package film 50 will be described later.

The lid 60 may have a desired shape, such as a cylindrical shape, a prism shape, a cuboid shape, or a cube shape, and contains a resin material, for example. As used herein, "contains a resin material" means that the content of the resin material is 50 mass% or more, preferably 80 mass% or more, more preferably 90 mass% or more, and still more preferably 95 mass% or more, based on the total amount of the material constituting the lid 60 taken as 100 mass%. That is, the material constituting the lid 60 may contain a material other than the resin material in addition to the resin material.

Specific examples of the resin include thermoplastic resins, for example, resins such as polyesters, polyolefins, polyamides, epoxy resins, acrylic resins, fluororesins, polyurethanes, silicone resins, and phenol resins, and modified products of these resins. The resin material may be a mixture of these resins, a copolymer of these resins, or a modified product of the copolymer. Among these, the resin material is preferably a heat-sealable resin such as a polyester or a polyolefin, and more preferably a polyolefin. When the resin material is a resin, the lid 60 may be molded by any molding method.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolyester that are polymerized with ethylene isophthalate and include ethylene terephthalate as a main repeating unit (abbreviated as polyethylene(terephthalate/isophthalate); hereinafter similarly abbreviated), polyethylene(terephthalate/adipate), polyethylene(terephthalate/sodium sulfoisophthalate), polyethylene(terephthalate/sodium isophthalate), polyethylene(terephthalate/phenyl-dicarboxylate) and polyethylene(terephthalate/decane dicarboxylate). Among these, polybutylene terephthalate is preferred as the resin material, from the viewpoint of improving the heat resistance and pressure resistance.

Specific examples of polyolefins include polyethylenes such as low-density polyethylene, medium-density polyethylene, high-density polyethylene, and linear low-density polyethylene; ethylene-α-olefin copolymers; polypropylenes such as homopolypropylene, block copolymers of polypropylene (for example, block copolymers of propylene and ethylene), and random copolymers of polypropylene (for example, random copolymers of propylene and ethylene); propylene-α-olefin copolymers; and terpolymers of ethylene-butene-propylene. When the polyolefin resin is a copolymer, it may be a block copolymer or a random copolymer. Among these, polypropylene is preferred because it has excellent heat sealability and electrolytic solution resistance.

The resin serving as the resin material may optionally contain a filler. Specific examples of the filler include glass beads, graphite, glass fibers, and carbon fibers. When the resin serving as the resin material contains the filler, the deformation resistance of the lid 60 against a temperature change can be improved.

The melt mass flow rate (measurement temperature: 230°C) of the resin material contained in the material constituting the lid 60 is preferably in the range of 1 g/10 min to 100 g/10 min, preferably in the range of 1 g/10 min to 80 g/10 min, preferably in the range of 1 g/10 min to 60 g/10 min, preferably in the range of 5 g/10 min to 100 g/10 min, preferably in the range of 5 g/10 min to 80 g/10 min, and more preferably in the range of 5 g/10 min to 60 g/10 min. The melt mass flow rate is measured based on JIS K7210-1:2014.

The lid 60 may contain a conductive material. As used herein, "contain a conductive material" means that the content of the conductive material is 50 mass% or more, preferably 80 mass% or more, more preferably 90 mass% or more, and still more preferably 95 mass% or more, based on the total amount of the material constituting the lid 60 taken as 100 mass%. That is, the material constituting the lid 60 may contain a material other than the conductive material in addition to the conductive material.

The conductive material constituting the lid 60 is, for example, a metal material. Examples of the metal material constituting the lid 60 include aluminum, aluminum alloys, nickel, copper, and copper alloys. For example, when the electrode assembly 20 is a lithium ion battery, the lid 60 connected to the positive electrode is preferably formed of aluminum or an aluminum alloy. The lid 60 connected to the negative electrode is preferably formed of nickel, copper, or a copper alloy. The material constituting the lid 60 connected to the negative electrode may be nickel-plated copper. The material constituting the lid 60 may include a recycled metal material. When the lid 60 contains a conductive material, the lid 60 also serves as the electrode terminal 30; thus, the electrode terminal 30 may be omitted in the electrical storage device 10.

The lid 60 may have a structure in which at least a portion of a lid main body 61 is covered with a cover 62. In the lid 60 of FIG. 3, the periphery of the lid main body 61 (the periphery of the thickness portion) is covered with the cover 62. The lid 60 may be joined to the heat-sealable resin layer 53 of the outer package film 50 with the cover 62 interposed therebetween. The cover 62 preferably contains a resin material. The lid 60 may include the lid main body 61 and the cover 62 that joins the lid main body 61 to the outer package film 50, and the cover 62 may contain a resin (resin material). The definition of "contain a resin material" for the cover 62 is the same as that used for the lid 60.

When the lid 60 contains a conductive material, the lid main body 61 may be formed of the conductive material, and at least a portion of the lid main body 61 may be covered with the cover 62.

When the lid 60 contains a conductive material, the lid 60 may be joined to the outer package film 50 with an adhesive film, instead of the cover, interposed therebetween. Any adhesive film can be selected as long as it is a film capable of bonding the outer package film 50 and the lid 60. The adhesive film is preferably a laminated film including at least a heat-sealable resin layer, a heat-resistant base material layer, and a heat-sealable resin layer in this order. The description of the heat-sealable resin layer 53 can apply to the heat-sealable resin layers of the adhesive film. The materials constituting the heat-sealable resin layers on both sides of the adhesive film may be the same or different, and are appropriately selected to match the material constituting the heat-sealable resin layer 53 of the outer package film 50 and the material constituting the lid 60. The material constituting the heat-sealable resin layer on the side of the adhesive film to be bonded to the lid 60 is preferably an acid-modified polyolefin-based resin obtained by graft-modification with an acid such as maleic anhydride. The heat-sealable resin layer on the side of the adhesive film to be bonded to the outer package film 50 is preferably formed of the same material as that of the heat-sealable resin layer 53 of the outer package film 50.

The heat-resistant base material layer may be any film that is formed of a heat-resistant resin, and may be, for example, an unstretched or stretched film of polyethylene terephthalate, polyethylene naphthalate, polyphenylene sulfide, polymethylpentene (registered trademark), polyacetal cyclic polyolefin, polyethylene, polypropylene, or the like. Polyethylene terephthalate is particularly preferred because of its low cost and high strength.

The adhesive film preferably has tackiness. When the below-described second seal portion 80 is formed with the adhesive film being disposed between the outer package film 50 and the lid 60, the adhesive film is less likely to be displaced with respect to the lid 60 and the outer package film 50. When the heat-sealable resin layers of the adhesive film contain a tackifying resin, tackiness can be imparted to the adhesive film. The tackifying resin may be, for example, an amorphous polyolefin. Examples of the amorphous polyolefin include amorphous polypropylene and a copolymer of amorphous propylene with another α-olefin. The content of the tackifying resin relative to the base material constituting the heat-sealable resin is preferably 10 to 20 weight% or less.

The lid 60 includes a first main surface located on the inner side (the electrode assembly 20 side) of the electrical storage device, a second main surface located on the outer side of the electrical storage device, and four side surfaces to be heat-sealed to the heat-sealable resin layer 53 of the outer package film 50. The first main surface faces the electrode assembly 20. The second main surface is a surface opposite to the first main surface.

When the lid 60 has a cylindrical shape, a prism shape, a cuboid shape, a cube shape, or the like, the lid 60 preferably has a certain thickness in the thickness direction (y direction) so as to inhibit deformation of the outer packaging 40 even when electrical storage devices 10 are stacked on one another. From another viewpoint, when the lid 60 has a cylindrical shape, a prism shape, a cuboid shape, a cube shape, or the like, the lid 60 preferably has a certain thickness in the thickness direction (y direction) so as to allow a lid joint portion of the lid 60 and the outer package film 50 to be suitably joined when the second seal portion 80 is formed. The minimum value of the thickness in the thickness direction (y direction) (the distance in the y direction between the first main surface and the second main surface) of the lid 60 is, for example, 1.0 mm, more preferably 3.0 mm, and still more preferably 4.0 mm. The maximum value of the thickness in the y direction of the lid 60 is, for example, 20 mm, more preferably 15.0 mm, still more preferably 10.0 mm, even more preferably 8.0 mm, and still more preferably 7.0 mm. The maximum value of the thickness in the y direction of the lid 60 may be 10 mm or more. The thickness of the material constituting the lid 60 is preferably in the range of 1.0 mm to 20.0 mm, 1.0 mm to 15.0 mm, 1.0 mm to 10.0 mm, 1.0 mm to 8.0 mm, 1.0 mm to 7.0 mm, 3.0 mm to 20.0 mm, 3.0 mm to 15.0 mm, 3.0 mm to 10.0 mm, 3.0 mm to 8.0 mm, 3.0 mm to 7.0 mm, 4.0 mm to 20.0 mm, 4.0 mm to 15.0 mm, 4.0 mm to 10.0 mm, 4.0 mm to 8.0 mm, and 4.0 mm to 7.0 mm. In the present disclosure, when the lid 60 is described as having a cylindrical shape, a prism shape, a cuboid shape, a cube shape, or the like, the present disclosure does not include an embodiment in which the lid 60 is formed only of the films as specified in the [Packaging Vocabulary] standard of the Japanese Industrial Standard (JIS). The thickness of the lid 60 may vary depending on the portion of the lid 60. When the thickness of the lid 60 varies depending on the portion, the thickness of the lid 60 refers to the thickness of the thickest portion.

In FIGS. 1 and 2, the lid 60 has a through-hole into which the electrode terminal 30 is inserted. The through-hole penetrates the first main surface and the second main surface of the lid. In a state where the electrode assembly 20 is housed, the electrode terminal 30 passes through the through-hole formed in the lid 60 and protrudes outside the outer packaging 40. A slight gap between the through-hole of the lid 60 and the electrode terminal 30 is filled with, for example, a resin. In the electrical storage device 10, any position can be selected as the position where the electrode terminal 30 protrudes outside. For example, the electrode terminal 30 may protrude outside from a hole formed in any of the six surfaces of the outer packaging 40. In this case, a slight gap between the outer packaging 40 and the electrode terminal 30 is filled with, for example, a resin. The electrode terminal 30 may protrude from between the lid 60 and the outer package film 50, or may protrude from the below-described first seal portion 70. In the electrical storage device 10, the lid 60 and the electrode terminal 30 are provided as separate parts; however, the lid 60 and the electrode terminal 30 may be integrally formed. When the electrode terminal 30 does not protrude from the edge of the outer packaging 40, the through-hole may not be formed in the lid 60.

In FIGS. 1 and 2, in a state where the outer package film 50 is wound around the electrode assembly 20, the facing surfaces (heat-sealable resin layers 53) of the outer package film 50 are heat-sealed to form the first seal portion 70.

The first seal portion 70 is formed by heat-sealing the heat-sealable resin layers of the outer package film 50. The first seal portion 70 extends in the longitudinal direction of the outer packaging 40. In the outer packaging 40, any position can be selected as the position where the first seal portion 70 is formed. As shown in FIG. 1, the basal portion of the first seal portion 70 is preferably located on the edge of the boundary between the main surface and the side surface of the outer packaging 40. The basal portion of the first seal portion 70 may be located on any surface of the outer packaging 40. In FIG. 1, the first seal portion 70 extends outside the electrode assembly 20 in plan view. For example, the first seal portion 70 may be folded toward the side surface or main surface of the outer packaging 40.

The heat-sealable resin layer 53 of the outer package film 50 and the lid joint portion of the lid 60 (the portion where the heat-sealable resin layer 53 of the outer package film 50 and the lid 60 are in contact with each other) are joined to each other by, for example, heat sealing, such that the second seal portion 80 is formed. Alternatively, the outer package film 50 and the lid 60 can be joined by any method such as welding.

### <1-2. Physical Properties of Electrical Storage Device>

In the electrical storage device of the present disclosure, the barrier layer 52 of the outer package film 50 is characterized in that the ratio (R1/R2) of area average grain size R1 (µm) to area average grain size R2 (µm) is 55% or more.

As used herein, the area average grain size R1 (µm) of the barrier layer 52 is an area average grain size (µm) obtained by performing crystal analysis using EBSD on a cross section obtained by cutting the barrier layer 52 in a direction that is perpendicular to a rolling direction of the barrier layer 52 and perpendicular to a surface of the barrier layer 52 (i.e., perpendicular from a surface of the barrier layer), at a position where the heat-sealable resin layer 53 of the outer package film 50 is heat-sealed to the lid 60 (the position of the second seal portion 80).

The area average grain size R2 (µm) of the barrier layer 52 is an area average grain size (µm) obtained by performing crystal analysis using EBSD on a cross section obtained by cutting the barrier layer 52 in the direction that is perpendicular to the rolling direction of the barrier layer 52 and perpendicular to the surface of the barrier layer 52, at a position where the heat-sealable resin layer 53 of the outer package film 50 is not heat-sealed.

From the viewpoint of more suitably achieving the effect of the invention of the present disclosure, the ratio (R1/R2) is preferably about 55% or more, more preferably about 60% or more, and still more preferably about 70% or more, and is preferably about 150% or less, more preferably about 140% or less, and still more preferably about 130% or less. Preferred ranges include from about 55 to 150%, from about 55 to 140%, from about 55 to 130%, from about 60 to 150%, from about 60 to 140%, from about 60 to 130%, from about 70 to 150%, from about 70 to 140%, and from about 70 to 130%.

The area average grain size R1 (µm) and the area average grain size R2 (µm) of the barrier layer 52 are values measured by the following method.

### <Measurement of Area Average Grain Sizes R1 and R2 of Barrier Layer>

From the electrical storage device, the barrier layer at the position where the heat-sealable resin layer of the outer package film is heat-sealed to the lid (seal portion (second seal portion)) and the barrier layer at the position where the heat-sealable resin layer of the outer package film is not heat-sealed (non-seal portion) are obtained, and crystal analysis using EBSD is performed on each barrier layer to measure the area average grain size R1 or R2 of the barrier layer. The measurement method is specifically as follows.

Crystal analysis using EBSD is performed on a cross section of each barrier layer in the direction perpendicular to the rolling direction to measure the area average grain size of the barrier layer. Details of the measurement conditions are as follows. The area average grain size is the diameter when the area calculated by [(measurement region - regions with a CI value below 0.1)/number of crystals] is assumed to be a circle, and is the area average grain size of crystals included in a measurement region of about 5000 µm² or more obtained by connecting a plurality of images acquired by the crystal analysis using EBSD. The grain size is the value measured for the crystals included in the measurement region based on the assumption that the shapes of the crystals are circles. The standard deviation of the grain size is calculated from the distribution of the grain sizes of the crystals (diameters when the crystal areas are assumed to be circles) included in a measurement region of about 5000 µm² or more (the entire region of the barrier layer in the thickness direction is used as the measurement region) obtained by connecting a plurality of images acquired by the crystal analysis using EBSD, after removing the regions with a CI value below 0.1. The area average grain size R2 of the barrier layer is measured at a position 3 cm away from the measurement position of the area average grain size R1.

### (Measurement Apparatus)

A Schottky field emission scanning electron microscope equipped with an EBSD detector is used as the apparatus.

### (Pre-Processing)

As pre-processing, the barrier layer is cut in the direction perpendicular to the rolling direction (RD) to obtain a cross section. The rolling direction of the barrier layer is a direction in which linear rolling marks extend when the glossy surface of the barrier layer is observed with a metallurgical microscope. A specific procedure is as follows: Initially, the barrier layer for use as a sample is cut into 5 mm (direction perpendicular to the rolling direction) × 10 mm (rolling direction) with a trimming razor blade and then embedded in resin. Next, using the trimming razor blade, the barrier layer is cut together with the resin in the direction perpendicular to the rolling direction of the barrier layer and perpendicular to the surface of the barrier layer, to expose a cross section of the barrier layer. Next, the obtained cross section is trimmed using a microtome. This trimming is performed by using the microtome to cut the cross section together with the embedding resin by about 1 mm in the direction perpendicular to the cross section, in order to reduce mechanical strain of the cross-sectional shape. Next, using an ion milling apparatus, the cross section is irradiated with a broad argon beam in the direction perpendicular to the cross section, at a protrusion width of 50 µm and a voltage of 6 kV for 4 hours, to prepare a measurement cross section. This operation is to precisely expose the cross section of the barrier layer, so as to minimize the mechanical damage into the crystal structure occurred in the previous step. In the present disclosure, the "direction perpendicular" when cutting the aluminum alloy foil may include an error of about 10°, because the cutting is performed while observing under a stereomicroscope. Specifically, the direction perpendicular to the rolling direction includes a tolerance of 80 to 100° with respect to the rolling direction, and the direction perpendicular to the surface includes a tolerance of 80 to 100° with respect to the surface.

### (SEM Conditions)

The conditions for the scanning electron microscope (SEM) used in EBSD are as follows:
Observation magnification: 2000 times (the observation magnification standard for imaging is Polaroid 545)
Acceleration voltage: 15 kV
Working distance: 15 mm
Sample tilt angle: 70°

### (EBSD Conditions)

The conditions for the crystal analysis using EBSD are as follows:
Step size: 150 nm

### Analysis conditions:

The crystal orientation analysis software OIM (Ver 7.3) from TSL Solutions K.K. is used to perform the following analysis.

A plurality of images are connected to obtain a measurement region of about 5000 µm² or more. The upper limit of the measurement region is about 30000 µm² or less, for example. Here, the region from the center to both edges of the barrier layer in the thickness direction is defined as the measurement region. Any portion of the cross section where the resin is attached or where the acid resistance film is present is excluded from the measurement region.

The CI value is set to 0.1 or more, the grain boundary condition is set to 0.5 degrees or more, and the minimum grain size is set to 3 steps or more.

After the images are connected, a pole figure is observed.

When the center of the pole figure is displaced 10° or more, the crystal data is rotated to adjust the symmetry. A pole figure to be used here for reference is measured from the sample surface by XRD. When obtaining a pole figure from the surface by EBSD, the sample surface is subjected to mechanical polishing, flat milling, electropolishing, or the like in order to eliminate the mechanical influence on the crystal structure of the sample surface, and then subjected to wide-area measurement. Then, the pole figure obtained in the surface direction is rotated 90° so as to be the same as that obtained in the same orientation as the orientation of the pole figure obtained from the cross section of the sample of interest. This pole figure is used for reference.

Data whose CI value (Confidence Index: CI value) defined by the crystal orientation analysis software OIM (Ver 7.3) from TSL Solutions K.K. is below 0.1 or less is excluded, and then the analysis is performed. In this manner, data based on the resin used for the pre-processing that is present on the front and back surfaces of the sample, grain boundaries present in the cross section, or amorphous portions can be excluded.

Each of the area average grain size R1 (µm) and the area average grain size R2 (µm) of the barrier layer 52 can be adjusted by adjusting the material constituting the barrier layer 52, the thickness of the barrier layer 52, and the material of the lid 60, for example. The area average grain size R1 (µm) of the barrier layer 52 can also be adjusted by adjusting the sealing conditions (temperature, pressure, and time) when heat-sealing the outer package film 50 and the lid 60 to form the second seal portion 80.

For example, increasing the Young's modulus of the barrier layer 52 (i.e., increasing the Young's modulus of the outer package film 50) can increase the ratio (R1/R2) of area average grain size R1 (µm) to area average grain size R2 (µm) of the barrier layer 52. Preferable Young's moduli of the barrier layer 52 will be described later. For example, increasing the thickness of the barrier layer 52 or using a high-strength metal is effective.

Moreover, for example, when the barrier layer 52 is formed of an aluminum alloy foil, and when using an aluminum alloy composition of the JIS standard 8000 series, the strength can be increased by adding a small amount of Si to the aluminum base metal. Furthermore, when using an aluminum alloy composition of the JIS standard 5000 series, the strength of the soft foil can be increased by solid solution strengthening, by forming a solid solution of Mg in aluminum.

Refining the grains of the metal forming the barrier layer 52 is also effective to increase the ratio (R1/R2). For example, in the case of an aluminum alloy composition of the JIS standard 8000 or 5000 series, an Al-Fe-based intermetallic compound crystallizes out during casting and serves as a nucleus to refine the grains. Furthermore, when employing differential speed rolling (a method of rolling with rolls with different peripheral speeds), the rolled material undergoes shear deformation over the entire sheet thickness in addition to normal rolling deformation. As a result, the crystal rotation is promoted, which promotes a change from the sub-grain boundary to the large-angle grain boundary, resulting in the formation of finer grains. This method is effective with cold working, but is more effective with warm working. Furthermore, increasing the number of rolling passes in hot rolling of the aluminum alloy foil or increasing the final cold rolling reduction is also effective. As the final cold rolling reduction from after intermediate annealing to the final thickness increases (for example, 80% or more), the amount of strain accumulated in the aluminum alloy foil increases, and the recrystallized grains after final annealing are refined.

As the rolling conditions for the aluminum foil, conditions such as rolling reduction, heating temperature, and heating time are adjusted. For example, an exemplary method includes the steps of subjecting aluminum metal or an aluminum alloy ingot to a homogenization treatment at about 500 to 600°C for about 1 to 2 hours; hot rolling; cold rolling; intermediate annealing in which the material is held at about 300 to 450°C for about 1 to 10 hours; cold rolling in which rolling is performed at a rolling reduction of 80% or more, preferably 90% or more, from after the intermediate annealing to final rolling; and final annealing in which the material is held at about 250 to 400°C for about 30 to 100 hours. However, the conditions for refining the grains are not limited thereto.

Furthermore, setting the linear thermal expansion coefficient of the barrier layer 52 to be close to the linear thermal expansion coefficient of the material used as the lid 60 (the lid main body 61 or the cover 62) is also effective.

### <1-3. Method for Manufacturing Electrical Storage Device>

The electrical storage device of the present disclosure can be manufactured by assembling the electrode assembly 20, the electrode terminals 30, the outer package film 50, and the lids 60 of the present disclosure. These parts can be assembled using, for example, a known method. A specific example of the electrical storage device of the present disclosure is given below.

The pair of lids 60 to which the electrode terminals 30 are joined are disposed with respect to the electrode assembly 20, so that the electrode terminals 30 and the electrode assembly 20 are electrically connected. Alternatively, the lids 60 may be joined to the electrode terminals 30 electrically connected to the electrode assembly 20.

Next, the electrode assembly 20 and the lids 60 are wrapped with the outer package film 50. The outer package film 50 is wound around the electrode assembly 20 and the lids 60 with tension applied to the outer package film 50, while restricting the movement of the electrode assembly 20 and the lids 60 by a restriction means. The restriction means is, for example, a groove into which the electrode assembly 20 and the lids 60 are fitted. Alternatively, the restriction means may be an apparatus that applies an external force to the electrode assembly 20 and the lids 60 to prevent the electrode assembly 20 and the lids 60 from moving. Alternatively, the restriction means may be an apparatus that applies a force to the electrode assembly 20 and the lids 60 in a direction opposite to the direction in which the outer package film 50 is pulled. The restriction means may include a roller that runs on the outer package film 50 while the outer package film 50 is being pulled, for removing wrinkles of the outer package film 50.

Next, the process of sealing the electrode assembly 20 with the outer packaging 40 is performed. Specifically, the step of forming the first seal portion 70 by heat-sealing the mutually facing heat-sealable resin layers 53 of the outer package film 50 and the step of forming the second seal portion 80 by heat-sealing the heat-sealable resin layer 53 of the outer package film 50 and the side surfaces of the lid 60 are performed. The order of these steps is not specifically limited; for example, the second seal portion 80 is formed, and then the first seal portion 70 is formed. The first seal portion 70 and the second seal portion 80 can be formed by heat-sealing the heat-sealable resin layers 53 using a heat seal bar, for example.

### <2-1. Laminated Structure and Physical Properties of Outer Package Film (Electrical Storage Device Outer Packaging Material)>

For example, as shown in FIG. 4, the outer package film (electrical storage device outer packaging material) 50 of the present disclosure is formed of a laminate including the barrier layer 52 and the heat-sealable resin layer 53. In the outer package film 50, the barrier layer 52 is the outermost layer, and the heat-sealable resin layer 53 is the innermost layer. When the electrical storage device is assembled using the outer package film 50 and electrical storage device elements (such as the electrode assembly 20 and the electrode terminals 30), the electrode assembly 20 is housed together with the lids 60 in the space formed by heat-sealing edge portions of the mutually facing heat-sealable resin layers 53 of the outer package film 50. In the laminate constituting the outer package film 50 of the present disclosure, when the barrier layer 52 is used as the reference, the heat-sealable resin layer 53 side relative to the barrier layer 52 is defined as the inner side, and the opposite side is defined as the outer side.

For example, as shown in FIG. 4, the outer package film 50 may optionally include a base material layer 51 on the outer side of the barrier layer 52. Moreover, for example, as shown in FIG. 4, the outer package film 50 may optionally include an adhesive agent layer 54 between the base material layer 51 and the barrier layer 52 for the purpose of improving the adhesiveness between these layers. Furthermore, for example, as shown in FIG. 4, the outer package film 50 may optionally include an adhesive layer 55 between the barrier layer 52 and the heat-sealable resin layer 53 for the purpose of improving the adhesiveness between these layers. Furthermore, as shown in FIG. 4, a surface coating layer (not shown) or the like may be optionally provided on the outer side of the base material layer 51 (opposite to the heat-sealable resin layer 53 side).

While the thickness of the laminate constituting the outer package film 50 is not specifically limited, it is, for example, about 250 µm or less, and preferably about 190 µm or less, about 180 µm or less, about 155 µm or less, or about 120 µm or less, from the viewpoint of reducing costs or improving the energy density, for example. On the other hand, from the viewpoint of maintaining the function of the outer package film to protect the electrode assembly 20, the thickness of the laminate constituting the outer package film 50 is preferably about 35 µm or more, about 45 µm or more, or about 60 µm or more. Preferred ranges of the laminate constituting the outer package film 50 include, for example, from about 35 to 250 µm, from about 35 to 190 µm, from about 35 to 180 µm, from about 35 to 155 µm, from about 35 to 120 µm, from about 45 to 250 µm, from about 45 to 190 µm, from about 45 to 180 µm, from about 45 to 155 µm, from about 45 to 120 µm, from about 60 to 250 µm, from about 60 to 190 µm, from about 60 to 180 µm, from about 60 to 155 µm, and from about 60 to 120 µm. In particular, the range of about 60 to 155 µm is preferred in order to make the electrical storage device lighter weight and smaller in thickness, while the range of about 155 to 190 µm is preferred in order to improve the conformability of the outer package film when wound around the electrode assembly.

In the outer package film 50, a ratio of the total thickness of the optional base material layer 51, the optional adhesive agent layer 54, the barrier layer 52, the optional adhesive layer 55, the heat-sealable resin layer 53, and the optional surface coating layer, relative to the thickness (entire thickness) of the laminate constituting the outer package film 50, is preferably 90% or more, more preferably 95% or more, and still more preferably 98% or more. As a specific example, when the outer package film 50 of the present disclosure includes the base material layer 51, the adhesive agent layer 54, the barrier layer 52, the adhesive layer 55, and the heat-sealable resin layer 53, the ratio of the total thickness of these layers relative to the thickness (entire thickness) of the laminate constituting the outer package film 50 is preferably 90% or more, more preferably 95% or more, and still more preferably 98% or more. Furthermore, when the outer package film 50 of the present disclosure is a laminate including the base material layer 51, the adhesive agent layer 54, the barrier layer 52, and the heat-sealable resin layer 53, the ratio of the total thickness of these layers relative to the thickness (entire thickness) of the laminate constituting the outer package film 50 may be, for example, 80% or more, preferably 90% or more, more preferably 95% or more, and still more preferably 98% or more.

From the viewpoint of more suitably achieving the effect of the invention of the present disclosure, the outer package film 50 has a Young's modulus of preferably 6000 MPa or more, more preferably 8000 MPa or more, and still more preferably 10000 MPa or more. On the other hand, the Young's modulus is preferably 40000 MPa or less, more preferably 35000 MPa or less, and still more preferably 30000 MPa or less. Preferred ranges include from about 6000 to 40000 MPa, from about 6000 to 35000 MPa, from about 6000 to 30000 MPa, from about 8000 to 40000 MPa, from about 8000 to 35000 MPa, from about 8000 to 30000 MPa, from about 10000 to 40000 MPa, from about 10000 to 35000 MPa, and from about 10000 to 30000 MPa. In the present disclosure, the Young's modulus of the outer package film is a value measured by the following method.

### <Measurement of Young's Modulus of Outer Package Film>

In accordance with JIS K6251:2017, an S-S curve in the TD direction of the outer package film is acquired under the measurement conditions shown below, and the Young's modulus (MPa) is calculated from the maximum value of the slope of the S-S curve.

### (Measurement Conditions)

A tensile testing machine is used.
Specimen shape: dumbbell No. 7
Specimen width: 2 mm
Specimen length: 35 mm
Specimen thickness: measured with a thickness gauge
Gauge length: 20 mm
Tensile speed: 50 mm/min
Test environment: 23 ± 5°C, 50 ± 30% RH
Number of measurements: average value of three measurements

As described above, for example, increasing the Young's modulus of the barrier layer 52 is effective as a method of increasing the Young's modulus of the outer package film 50.

### <2-2. Layers Constituting Outer Package Film>

### [Base Material Layer 51]

In the present disclosure, the base material layer 51 is a layer optionally provided for the purpose of, for example, functioning as a base material of the outer package film. The base material layer 51 is located as the outermost layer of the outer package film.

The material forming the base material layer 51 is not specifically limited as long as it functions as a base material, i.e., has at least insulation properties. The base material layer 51 may be formed using a resin, for example, and the resin may contain additives as described below.

When the base material layer 51 is formed of a resin, the base material layer 51 may be formed of a resin film, for example. When the base material layer 51 is formed of a resin film, a pre-formed resin film may be used as the base material layer 51 when laminating the base material layer 51 with the barrier layer 52 or the like to produce the outer package film 50 of the present disclosure. Alternatively, the resin forming the base material layer 51 may be formed into a film on a surface of the barrier layer 52 or the like by extrusion, coating, or the like, so as to be the base material layer 51 formed of a resin film. The resin film may be an unstretched film or a stretched film. Examples of the stretched film include a uniaxially stretched film and a biaxially stretched film, with a biaxially stretched film being preferred. Examples of stretching methods for forming a biaxially stretched film include sequential biaxial stretching, inflation, and simultaneous biaxial stretching. Examples of methods of applying the resin include roll coating, gravure coating, and extrusion coating.

Examples of the resin forming the base material layer 51 include resins such as polyesters, polyamides, polyolefins, epoxy resins, acrylic resins, fluororesins, polyurethanes, silicone resins, and phenol resins, and modified products of these resins. The resin forming the base material layer 51 may also be a copolymer of these resins or a modified product of the copolymer. The resin forming the base material layer 51 may also be a mixture of these resins.

The base material layer 51 preferably contains these resins as a main component, and more preferably contains a polyester or a polyamide as a main component. As used herein, the "main component" means a resin component whose content is, for example, 50 mass% or more, preferably 60 mass% or more, more preferably 70 mass% or more, still more preferably 80 mass% or more, even more preferably 90 mass% or more, still more preferably 95 mass% or more, even more preferably 98 mass% or more, and still more preferably 99 mass% or more, of the resin components contained in the base material layer 51. For example, the phrase "the base material layer 51 contains a polyester or a polyamide as a main component" means that the polyester or polyamide content is, for example, 50 mass% or more, preferably 60 mass% or more, more preferably 70 mass% or more, still more preferably 80 mass% or more, even more preferably 90 mass% or more, still more preferably 95 mass% or more, even more preferably 98 mass% or more, and still more preferably 99 mass% or more, of the resin components contained in the base material layer 51.

Among these, the resin forming the base material layer 51 is preferably a polyester or a polyamide.

Specific examples of polyesters include polyethylene terephthalate, polybutylene terephthalate, polyethylene naphthalate, polybutylene naphthalate, polyethylene isophthalate, and copolyesters. Examples of copolyesters include copolyesters containing ethylene terephthalate as a main repeating unit. Specific examples of these copolyesters include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used alone or in combination.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a constituent unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polyamide MXD6 (polymethaxylylene adipamide); cycloaliphatic polyamides such as polyamide PACM6 (polybis(4-aminocyclohexyl)methaneadipamide); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 51 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, still more preferably at least one of a biaxially stretched polyethylene terephthalate film, a biaxially stretched polybutylene terephthalate film, a biaxially stretched nylon film, and a biaxially stretched polypropylene film.

The base material layer 51 may be a single layer, or may include two or more layers. When the base material layer 51 includes two or more layers, the base material layer 51 may be a laminate obtained by laminating resin films with an adhesive agent or the like, or a resin film laminate obtained by co-extruding resins to form two or more layers. The resin film laminate obtained by co-extruding resins to form two or more layers may be used as the base material layer 51 in an unstretched state, or may be uniaxially stretched or biaxially stretched and used as the base material layer 51.

Specific examples of the resin film laminate with two or more layers in the base material layer 51 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 51 is a resin film laminate with two layers, the base material layer 51 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 51 when the base material layer 51 is a resin film laminate with two or more layers. In a laminate of a polyester resin film and a polyamide resin film, preferred thickness ranges for the polyester resin film include about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 10 to 11 µm, about 18 to 33 µm, about 18 to 28 µm, and about 18 to 23 µm; and preferred thickness ranges for the polyamide resin film include about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 10 to 11 µm, about 18 to 33 µm, about 18 to 28 µm, and about 18 to 23 µm.

When the base material layer 51 is a resin film laminate with two or more layers, the two or more resin films may be laminated with an adhesive agent interposed therebetween. Specific examples of the preferred adhesive agent include the same adhesive agents as those exemplified for the adhesive agent layer 54 described later. The method for laminating a resin film having two or more layers is not particularly limited, and a known method can be employed. Examples thereof include a dry lamination method, a sandwich lamination method, an extrusion lamination method and a thermal lamination method, and a dry lamination method is preferable. When the resin film is laminated by a dry lamination method, it is preferable to use a polyurethane adhesive agent as the adhesive agent. Here, the thickness of the adhesive agent is, for example, about 2 to 5 µm. The lamination may be performed with an anchor coat layer formed on the resin film. Examples of the anchor coat layer include the same adhesive agents as those exemplified for the adhesive agent layer 54 described later. Here, the thickness of the anchor coat layer is, for example, about 0.01 to 1.0 µm.

Additives such as a slipping agent, a flame retardant, an antiblocking agent, an antioxidant, a light stabilizer, a tackifier, an antistatic agent, and a colorant may be present on at least one of the surface of the base material layer 51 and/or inside the base material layer 51. The additives may be used alone, or may be used in combination of two or more thereof.

In the present disclosure, it is preferable that a slipping agent is present on the surface of the base material layer 51 and/or inside the base material layer 51 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearyl isophthalic acid amide. The slipping agents may be used alone, or may be used in combination of two or more thereof, and are preferably used in combination of two or more thereof.

When the slipping agent is present on the surface of the base material layer 51, the amount of the slipping agent present is not particularly limited, and is, for example, about 3 mg/m² or more, preferably about 4 mg/m² or more, still more preferably about 5 mg/m² or more. The amount of the slipping agent present on the surface of the base material layer 51 is, for example, about 15 mg/m² or less, preferably about 14 mg/m² or less, still more preferably about 10 mg/m² or less. The amount of the slipping agent present on the surface of the base material layer 51 is preferably in the range of about 3 to 15 mg/m², about 3 to 14 mg/m², about 3 to 10 mg/m², about 4 to 15 mg/m², about 4 to 14 mg/m², about 4 to 10 mg/m², about 5 to 15 mg/m², about 5 to 14 mg/m², or about 5 to 10 mg/m².

The slipping agent present on the surface of the base material layer 51 may be one obtained by exuding the slipping agent contained in the resin forming the base material layer 51, or one obtained by applying the slipping agent to the surface of the base material layer 51.

The thickness of the base material layer 51 is not specifically limited as long as the function as a base material is exhibited; for example, the thickness is about 3 µm or more, and preferably about 10 µm or more. On the other hand, the thickness of the base material layer 51 is, for example, about 50 µm or less, and preferably about 35 µm or less, about 11 µm or less, or about 8 µm or less. Preferred ranges of the thickness of the base material layer 51 include from about 3 to 50 µm, from about 3 to 35 µm, from about 3 to 11 µm, from about 3 to 8 µm, from about 10 to 50 µm, and from about 10 to 35 µm. In particular, the range of about 3 to 35 µm, about 3 to 11 µm, or about 3 to 8 µm is preferred in order to make the electrical storage device lighter weight and smaller in thickness, while the range of about 35 to 50 µm is preferred in order to improve the conformability. When the base material layer 51 is a laminate of two or more layers of resin films, the thickness of the resin film constituting each layer is not specifically limited, but is, for example, about 2 µm or more, and preferably about 10 µm or more, or about 18 µm or more. On the other hand, the thickness of the resin film constituting each layer is, for example, about 33 µm or less, and preferably about 28 µm or less, about 23 µm or less, about 18 µm or less, about 11 µm or less, or about 8 µm or less. Preferred ranges of the thickness of the resin film constituting each layer include from about 2 to 33 µm, from about 2 to 28 µm, from about 2 to 23 µm, from about 2 to 18 µm, from about 2 to 11 µm, from about 2 to 8 µm, from about 10 to 33 µm, from about 10 to 28 µm, from about 10 to 23 µm, from about 10 to 18 µm, from about 10 to 11 µm, from about 18 to 33 µm, from about 18 to 28 µm, and from about 18 to 23 µm.

### [Adhesive Agent Layer 54]

In the outer package film of the present disclosure, the adhesive agent layer 54 is a layer that is optionally provided between the base material layer 51 and the barrier layer 52, for the purpose of improving the adhesiveness between these layers.

The adhesive agent layer 54 is formed from an adhesive agent capable of bonding the base material layer 51 and the barrier layer 52. The adhesive agent used for forming the adhesive agent layer 54 is not limited, and may be any of a chemical reaction type, a solvent volatilization type, a heat melting type, a heat pressing type, and the like. The adhesive agent may be a two-liquid curable adhesive agent (two-liquid adhesive agent), a one-liquid curable adhesive agent (one-liquid adhesive agent), or a resin that does not involve curing reaction. The adhesive agent layer 54 may be a single layer or a multi-layer.

Specific examples of the adhesive component contained in the adhesive agent include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; polyvinyl acetate; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesive agents are preferable. The adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive agent include polyurethane adhesive agents containing a first component containing a polyol compound and a second component containing an isocyanate compound. The polyurethane adhesive agent is preferably a two-liquid curable polyurethane adhesive having polyol such as polyester polyol, polyether polyol or acrylic polyol as a first component, and aromatic or aliphatic polyisocyanate as a second component. Examples of the polyurethane adhesive agent include polyurethane adhesive agents containing an isocyanate compound and a polyurethane compound obtained by reacting a polyol compound with an isocyanate compound in advance. Examples of the polyurethane adhesive agent include polyurethane adhesive agents containing a polyol compound and a polyurethane compound obtained by reacting a polyol compound with an isocyanate compound in advance. Examples of the polyurethane adhesive agent include polyurethane adhesive agents obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates. It is also possible to use a multimer (e.g., a trimer) as the polyisocyanate compound. Examples of the multimer include adducts, biurets, and nurates. Since the adhesive agent layer 54 is formed of a polyurethane adhesive agent, excellent electrolytic solution resistance is imparted to the exterior material for electrical storage devices, so that peeling of the base material layer 51 is suppressed even if the electrolytic solution is deposited on the lateral surface.

Other components may be added to the adhesive agent layer 54 as long as bondability is not inhibited, and the adhesive agent layer 54 may contain a colorant, a thermoplastic elastomer, a tackifier, a filler, and the like. When the adhesive agent layer 54 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 54 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices. From the viewpoint of dissipating heat generated from the electrical storage device, mica is preferably used.

The average particle size of the pigment is not particularly limited, and is, for example, about 0.03 to 5 µm, preferably about 0.05 to 2 µm. The average particle size of the pigment is a median diameter measured by a laser diffraction/scattering particle size distribution measuring apparatus.

The content of the colorant in the adhesive agent layer 54 is not particularly limited as long as the exterior material for electrical storage devices is colored, and the content is, for example, about 5 to 60 mass%, preferably 10 to 40 mass%.

The thickness of the adhesive agent layer 54 is not particularly limited as long as the base material layer 51 and the barrier layer 52 can be bonded to each other, and the thickness is, for example, about 1 µm or more, or about 2 µm or more. The thickness of the adhesive agent layer 54 is, for example, about 10 µm or less, or about 5 µm or less. The thickness of the adhesive agent layer 54 is preferably in the range of about 1 to 10 µm, about 1 to 5 µm, about 2 to 10 µm, or about 2 to 5 µm.

### [Colored layer]

The colored layer is a layer provided between the base material layer 51 and the barrier layer 52 if necessary (not shown). When the adhesive agent layer 54 is present, the colored layer may be provided between the base material layer 51 and the adhesive agent layer 54 or between the adhesive agent layer 54 and the barrier layer 52. The colored layer may be provided outside the base material layer 51. By providing the colored layer, the exterior material for electrical storage devices can be colored.

The colored layer can be formed by, for example, applying an ink containing a colorant to the surface of the base material layer 51, or the surface of the barrier layer 52. As the colorant, known colorants such as pigments and dyes can be used. The colorants may be used alone, or may be used in combination of two or more thereof.

Specific examples of the colorant contained in the colored layer include the same colorants as those exemplified in the section [Adhesive agent layer 54].

### [Barrier layer 52]

In the exterior material for electrical storage devices, the barrier layer 52 is a layer which suppresses at least ingress of moisture.

Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 3 may be provided. Preferably, the barrier layer 52 contains a layer formed of a metal material. Specific examples of the metal material forming the barrier layer 52 include aluminum alloys, stainless steel, titanium steel and steel sheets. When the metal material is used as a metal foil, it is preferable that the metal material includes at least one of an aluminum alloy foil and a stainless steel foil. Specific examples of the metal material constituting the barrier layer 52 include aluminum, aluminum alloys, titanium, titanium alloys, steel (including stainless steel), copper, copper alloys, nickel, nickel alloys, magnesium, magnesium alloys, niobium, and iron. Preferred among these are aluminum alloys, stainless steel, titanium steel, steel sheets, and the like. When the metal material is used as a metal foil, it preferably contains at least one of an aluminum alloy foil or a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacture method described in International Publication No. WO 2022/092231. The barrier layer 52 may be formed only of a recycled material, or may be formed of a mixed material of a recycled material and a virgin material. The metal recycled material is a metal material obtained by, for example, collecting, isolating and purifying various products used in what is called a city, wastes from manufacture processes, and the like, so that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy, from the viewpoint of improving the conformability of the outer package film when wound around the electrode assembly, and is preferably an aluminum alloy foil containing iron, from the viewpoint of further improving the conformability. In the aluminum alloy foil containing iron (100 mass%), the content of iron is preferably 0.1 to 9.0 mass%, and more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160:1994 A8021H-O, JIS H4160:1994 A8079H-O, JIS H4000:2014 A8021P-O, or JIS H4000:2014 A8079P-O. If necessary, silicon, magnesium, copper, manganese or the like may be added. Softening can be performed by annealing or the like.

From the viewpoint of improving the mechanical strength of the outer package film 50, the aluminum alloy foil is more preferably a hard aluminum alloy foil formed of, for example, a work-hardened aluminum alloy. Examples of the hard aluminum alloy foil include aluminum alloy foils having the compositions as defined in JIS H4160:1994 A8021H-H18, JIS H4160:1994 A8079H-H18, JIS H4000:2014 A8021P-H14, or JIS H4000:2014 A8079P-H14. From the viewpoint of improving the mechanical strength of the outer package film 50, the aluminum alloy foil is preferably an aluminum alloy foil containing magnesium. In the aluminum alloy foil containing magnesium (100 mass%), the magnesium content is preferably 0.2 to 5.6 mass%, and more preferably 0.2 to 3.0 mass%. Examples of the aluminum alloy foil containing magnesium include aluminum alloy foils having the compositions as defined in JIS H4000:2017 A5005P-O, JIS H4000:2017 A5050P-O, or JIS H4000:2017 A5052P-O. From the viewpoint of improving the mechanical strength of the outer package film 50, the aluminum alloy foil is also preferably an aluminum alloy foil containing manganese. In the aluminum alloy foil containing manganese (100 mass%), the manganese content is preferably 0.3 to 1.5 mass%, and more preferably 1.0 to 1.5 mass%. Examples of the aluminum alloy foil containing manganese include aluminum alloy foils having the compositions as defined in JIS H4000:2017 A3003P-O, JIS H4000:2017 A3103P-O, JIS H4000:2017 A3004P-O, or JIS H4000:2017 A3104P-O.

Examples of the stainless steel foil include austenite-based stainless steel foils, ferritic stainless steel foils, austenitic/ferritic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenite-based stainless steel.

Specific examples of the austenite-based stainless steel foil include SUS 304 stainless steel, SUS 301 stainless steel and SUS 316L stainless steel, and of these, SUS 304 stainless steel is particularly preferable.

The thickness of the barrier layer 52 when it is a metal foil may be any thickness that can exhibit at least the function of the barrier layer to prevent the ingress of moisture, and is, for example, about 9 to 200 µm. The thickness of the barrier layer 52 is preferably about 200 µm or less, more preferably about 150 µm or less, still more preferably about 120 µm or less, even more preferably about 100 µm or less, and particularly preferably about 90 µm or less. On the other hand, the thickness of the barrier layer 52 is preferably about 10 µm or more, more preferably about 20 µm or more, and still more preferably about 25 µm or more. Preferred ranges of the thickness of the barrier layer 52 include from about 9 to 200 µm, from about 9 to 150 µm, from about 9 to 120 µm, from about 9 to 100 µm, from about 9 to 90 µm, from about 10 to 200 µm, from about 10 to 150 µm, from about 10 to 120 µm, from about 10 to 100 µm, from about 10 to 90 µm, from about 20 to 200 µm, from about 20 to 150 µm, from about 20 to 120 µm, from about 20 to 100 µm, from about 20 to 90 µm, from about 25 to 200 µm, from about 25 to 150 µm, from about 25 to 120 µm, from about 25 to 100 µm, and from about 25 to 90 µm. When the barrier layer 52 is formed of an aluminum alloy foil, from the viewpoint of imparting high conformability and high rigidity to the outer package film 50, the thickness of the barrier layer 52 is preferably about 40 µm or more, more preferably about 60 µm or more, still more preferably about 70 µm or more, and even more preferably about 80 µm or more. On the other hand, the thickness is preferably about 200 µm or less, more preferably about 150 µm or less, still more preferably about 120 µm or less, even more preferably about 100 µm or less, and still more preferably about 90 µm or less. Preferred ranges include from about 40 to 200 µm, from about 40 to 150 µm, from about 40 to 120 µm, from about 40 to 100 µm, from about 40 to 90 µm, from 60 to 200 µm, from about 60 to 150 µm, from about 60 to 120 µm, from about 60 to 100 µm, from about 60 to 90 µm, from about 70 to 200 µm, from about 70 to 150 µm, from about 70 to 120 µm, from about 70 to 100 µm, from about 70 to 90 µm, from about 80 to 200 µm, from about 80 to 150 µm, from about 80 to 120 µm, from about 80 to 100 µm, and from about 80 to 90 µm. High conformability of the outer package film 50 can contribute to an increase in the capacity of the electrical storage device. Increased capacity of the electrical storage device increases the weight of the electrical storage device; however, increased rigidity of the outer package film 50 can contribute to high sealing performance for the electrical storage device. In particular, when the barrier layer 52 is formed of a stainless steel foil, the thickness of the stainless steel foil is preferably about 80 µm or less, more preferably about 70 µm or less, still more preferably about 65 µm or less, even more preferably about 60 µm or less, and particularly preferably about 50 µm or less. On the other hand, the thickness of the stainless steel foil is preferably about 10 µm or more, and more preferably about 15 µm or more. Preferred ranges of the thickness of the stainless steel foil include from about 10 to 80 µm, from about 10 to 70 µm, from about 10 to 65 µm, from about 10 to 60 µm, from about 10 to 50 µm, from about 15 to 80 µm, from about 15 to 70 µm, from about 15 to 65 µm, from about 15 to 60 µm, and from about 15 to 50 µm.

When the barrier layer 52 is a metal foil, it is preferable that a corrosion-resistant film is provided at least on a surface on a side opposite to the base material layer for preventing dissolution and corrosion. The barrier layer 52 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of the treatments for forming the corrosion-resistant film may be performed, or two or more thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

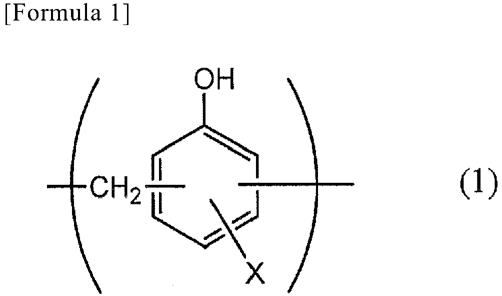

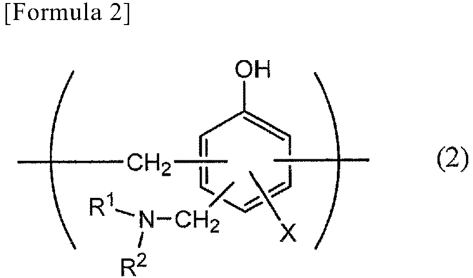

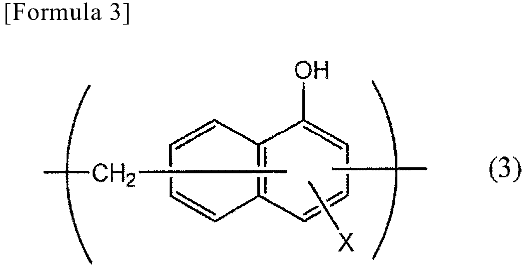

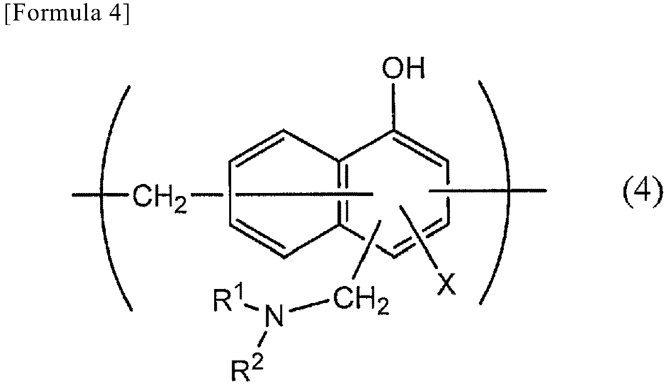

In the general formulae (1) to (4), X represents a hydrogen atom, a hydroxy group, an alkyl group, a hydroxyalkyl group, an allyl group, or a benzyl group. R¹ and R² are the same or different, and each represent a hydroxy group, an alkyl group or a hydroxyalkyl group. In the general formulae (1) to (4), examples of the alkyl group represented by X, R¹ and R² include linear or branched alkyl groups having 1 to 4 carbon atoms, such as a methyl group, an ethyl group, an n-propyl group, an isopropyl group, an n-butyl group, an isobutyl group and a tert-butyl group. Examples of the hydroxyalkyl group represented by X, R¹ and R² include linear or branched alkyl groups having 1 to 4 carbon atoms, which are substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group and a 4-hydroxybutyl group. In the general formulae (1) to (4), the alkyl groups and the hydroxyalkyl groups represented by X, R¹, and R² may be identical or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1000000, and more preferably about 1000 to 20000, for example. The aminated phenol polymer is manufactured by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle size of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. The phosphoric acid or phosphate is preferably condensed phosphoric acid or a condensed phosphate.

Examples of the corrosion-resistant film include films formed by applying a dispersion of fine particles of a metal oxide, such as aluminum oxide, titanium oxide, cerium oxide or tin oxide, or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 52 in the chemical conversion treatment is not particularly limited, but for example when the coating-type chromate treatment is performed, and it is desirable that the chromic acid compound is contained in an amount of, for example, about 0.5 to 50 mg, preferably about 1.0 to 40 mg, in terms of chromium, the phosphorus compound is contained in an amount of, for example, about 0.5 to 50 mg, preferably about 1.0 to 40 mg, in terms of phosphorus, and the aminated phenol polymer is contained in an amount of, for example, about 1.0 to 200 mg, preferably about 5.0 to 150 mg, per 1 m² of the surface of the barrier layer 52.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to about 200°C. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### [Heat-Sealable Resin Layer 53]

In the outer package film of the present disclosure, the heat-sealable resin layer 53 corresponds to the innermost layer, and is a layer (sealant layer) that is heat-sealed to another heat-sealable resin layer during the assembly of the electrical storage device to exhibit the function of hermetically sealing the electrode assembly 20.

The resin forming the heat-sealable resin layer 53 is not particularly limited as long as it can be heat-sealed, a resin containing a polyolefin backbone such as a polyolefin or an acid-modified polyolefin is preferable. The resin forming the heat-sealable resin layer 53 can be confirmed to contain a polyolefin backbone by an analysis method such as infrared spectroscopy or gas chromatography-mass spectrometry. It is preferable that a peak derived from maleic anhydride is detected when the resin forming the heat-sealable resin layer 53 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the heat-sealable resin layer 53 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

The heat-sealable resin layer 53 preferably contains a resin containing a polyolefin backbone as a main component, more preferably contains polyolefin as a main component, still more preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 53. For example, the phrase "the heat-sealable resin layer 53 contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 53.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is still more preferable.

The polyolefin may be an acid-modified polyolefin. The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 53 may be formed from one resin alone, or may be formed from a blend polymer obtained by combining two or more resins. Further, the heat-sealable resin layer 53 may be composed of only one layer, or may be composed of two or more layers with the same resin or different resins.

In manufacturing of the exterior material 10 for electrical storage devices of the present disclosure by laminating the heat-sealable resin layer 53 with the barrier layer 52, the adhesive layer 55 or the like, a resin film formed in advance may be used as the heat-sealable resin layer 53. A heat-sealable resin for forming the heat-sealable resin layer 53 may be formed into a film on the surface of the barrier layer 52, the adhesive layer 55 or the like by extrusion molding, coating or the like to obtain the heat-sealable resin layer 53 formed of a resin film.

The heat-sealable resin layer 53 may also optionally contain a lubricant and the like. The inclusion of a lubricant in the heat-sealable resin layer 53 can improve the conformability of the outer package film when wound around the electrode assembly. The lubricant is not specifically limited and may be a known lubricant.

The slipping agent is not particularly limited, and is preferably an amide-based slipping agent. Specific examples of the slipping agent include those exemplified for the base material layer 51. The slipping agents may be used alone, or may be used in combination of two or more thereof, and are preferably used in combination of two or more thereof.

In the present disclosure, preferably, at least one of the surface or the inside of the heat-sealable resin layer 53 contains a lubricant, from the viewpoint of improving the conformability of the outer package film when wound around the electrode assembly. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearyl isophthalic acid amide. The slipping agents may be used alone, or may be used in combination of two or more thereof, and are preferably used in combination of two or more thereof.

When the slipping agent is present on the surface of the heat-sealable resin layer 53, the amount of the slipping agent present is not particularly limited. From the viewpoint of improving the moldability of the exterior material for electrical storage devices, the amount of the slipping agent present is preferably about 1 mg/m² or more, more preferably about 3 mg/m² or more, still more preferably about 5 mg/m² or more, still more preferably about 10 mg/m² or more, still more preferably about 15 mg/m² or more, and preferably about 50 mg/m² or less, more preferably about 40 mg/m² or less, and is preferably in the range of 1 to 50 mg/m², about 1 to 40 mg/m², about 3 to 50 mg/m², about 3 to 40 mg/m², about 5 to 50 mg/m², about 5 to 40 mg/m², about 10 to 50 mg/m², about 10 to 40 mg/m², about 15 to 50 mg/m², or about 15 to 40 mg/m².

When the slipping agent is present inside the heat-sealable resin layer 53, the amount of the slipping agent present is not particularly limited. From the viewpoint of improving the moldability of the exterior material for electrical storage devices, the amount of the slipping agent present is preferably about 100 ppm or more, more preferably about 300 ppm or more, still more preferably about 500 ppm or more, and preferably about 3000 ppm or less, more preferably about 2000 ppm or less, and is preferably in the range of about 100 to 3000 ppm, about 100 to 2000 ppm, about 300 to 3000 ppm, about 300 to 2000 ppm, about 500 to 3000 ppm, or about 500 to 2000 ppm. When two or more slipping agents are present inside the heat-sealable resin layer 53, the above-described slipping agent amount is the total amount of the slipping agents. When two or more types of slipping agents are present inside the heat-sealable resin layer 53, the amount of the first type of slipping agent present is not particularly limited. From the viewpoint of improving the moldability of the exterior material for electrical storage devices, the amount of the first type of slipping agent present is preferably about 100 ppm or more, more preferably about 300 ppm or more, still more preferably about 500 ppm or more, and preferably about 3000 ppm or less, more preferably about 2000 ppm or less, and is preferably in the range of about 100 to 3000 ppm, about 100 to 2000 ppm, about 300 to 3000 ppm, about 300 to 2000 ppm, about 500 to 3000 ppm, or about 500 to 2000 ppm. The amount of the second type of slipping agent present is not particularly limited. From the viewpoint of improving the moldability of the exterior material for electrical storage devices, the amount of the second type of slipping agent present is preferably about 50 ppm or more, more preferably about 100 ppm or more, still more preferably about 200 ppm or more, and preferably about 1500 ppm or less, more preferably about 1000 ppm or less, and is preferably in the range of about 50 to 1500 ppm, about 50 to 1000 ppm, about 100 to 1500 ppm, about 100 to 1000 ppm, about 200 to 1500 ppm, or about 200 to 1000 ppm.

The slipping agent present on the surface of the heat-sealable resin layer 53 may be one obtained by exuding the slipping agent contained in the resin forming the heat-sealable resin layer 53, or one obtained by applying a slipping agent to the surface of the heat-sealable resin layer 53.

The thickness of the heat-sealable resin layer 53 is not particularly limited as long as the heat-sealable resin layers are heat-sealed to each other to exhibit a function of sealing the electrical storage device element, and the thickness is, for example, about 100 µm or less, preferably about 85 µm or less, more preferably about 15 to 85 µm. For example, when the thickness of the adhesive layer 55 described later is 10 µm or more, the thickness of the heat-sealable resin layer 53 is preferably about 85 µm or less, more preferably about 15 to 45 µm. For example, when the thickness of the adhesive layer 55 described later is less than 10 µm or the adhesive layer 55 is not provided, the thickness of the heat-sealable resin layer 53 is preferably about 20 µm or more, more preferably about 35 to 85 µm.

### [Adhesive layer 55]

In the exterior material for electrical storage devices according to the present disclosure, the adhesive layer 55 is a layer provided between the barrier layer 52 (or corrosion-resistant film) and the heat-sealable resin layer 53 if necessary for firmly bonding these layers to each other.

The adhesive layer 55 is formed from a resin capable of bonding the barrier layer 52 and the heat-sealable resin layer 53 to each other. The resin to be used for forming the adhesive layer 55 is, for example, the same as that of the adhesive agent exemplified for the adhesive agent layer 54.

From the viewpoint of firmly bonding the adhesive layer 55 to the heat-sealable resin layer 53, it is preferable that the resin to be used for forming the adhesive layer 55 contains a polyolefin backbone. Examples thereof include the polyolefins, acid-modified polyolefins, cyclic polyolefins and acid-modified cyclic polyolefins exemplified for the heat-sealable resin layer 53 described above. On the other hand, from the viewpoint of firmly bonding the barrier layer 52 and the adhesive layer 55 to each other, it is preferable that the adhesive layer 55 contains an acid-modified polyolefin. Examples of the acid modifying component include dicarboxylic acids such as maleic acid, itaconic acid, succinic acid and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for electrical storage devices, the olefin component is preferably a polypropylene-based resin, and it is most preferable that the adhesive layer 55 contains maleic anhydride-modified polypropylene.

When a resin used for formation of the adhesive layer 55 contains a polyolefin backbone, the adhesive layer 55 preferably contains a resin containing a polyolefin backbone as a main component, more preferably contains acid-modified polyolefin as a main component, still more preferably contains acid-modified polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 55. For example, the phrase "the adhesive layer 55 contains acid-modified polypropylene as a main component" means that the content ratio of acid-modified polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 55.

The resin forming the adhesive layer 55 can be confirmed to contain a polyolefin backbone by an analysis method such as infrared spectroscopy, gas chromatography-mass spectrometry, and the analysis method is not particularly limited. The resin forming the adhesive layer 55 is confirmed to contain an acid-modified polyolefin, for example, when peaks derived from maleic anhydride are detected near wavenumbers of 1760 cm⁻¹ and 1780 cm⁻¹ when a maleic anhydride-modified polyolefin is measured by infrared spectroscopy. However, if the degree of acid modification is low, the peaks may be too small to be detected. In that case, the peaks can be analyzed by nuclear magnetic resonance spectroscopy.

Further, from the viewpoint of securing durability, such as heat resistance and content resistance and securing moldability, of the exterior material for electrical storage devices while reducing the thickness, the adhesive layer 55 is more preferably a cured product of a resin composition containing an acid-modified polyolefin and a curing agent. Preferred examples of the acid-modified polyolefin include those described above.

The adhesive layer 55 is preferably a cured product of a resin composition containing an acid-modified polyolefin and at least one selected from the group consisting of a compound having an isocyanate group, a compound having an oxazoline group, and a compound having an epoxy group, particularly preferably a cured product of a resin composition containing an acid-modified polyolefin and at least one selected from the group consisting of a compound having an isocyanate group and a compound having an epoxy group. Preferably, the adhesive layer 55 preferably contains at least one selected from the group consisting of polyurethane, polyester and epoxy resin. More preferably, the adhesive layer 55 contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. When an unreacted substance of a curing agent, such as a compound having an isocyanate group, a compound having an oxazoline group, or an epoxy resin remains in the adhesive layer 55, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 52 and the adhesive layer 55, the adhesive layer 55 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 55 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 52 and the adhesive layer 55. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 55 is preferably in the range of 0.1 to 50 mass%, more preferably in the range of 0.5 to 40 mass% in the resin composition forming the adhesive layer 55. This enables effective improvement of adhesion between the barrier layer 52 and the adhesive layer 55.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 55 is preferably in the range of 0.1 to 50 mass%, more preferably in the range of 0.5 to 40 mass% in the resin composition forming the adhesive layer 55. This enables effective improvement of adhesion between the barrier layer 52 and the adhesive layer 55.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2000, more preferably about 100 to 1000, still more preferably about 200 to 800. In the present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 55 is preferably in the range of 0.1 to 50 mass%, more preferably in the range of 0.5 to 40 mass% in the resin composition forming the adhesive layer 55. This enables effective improvement of adhesion between the barrier layer 52 and the adhesive layer 55.

The polyurethane is not particularly limited, and a known polyurethane can be used. The adhesive layer 55 may be, for example, a cured product of two-liquid curable polyurethane.

The proportion of the polyurethane in the adhesive layer 55 is preferably in the range of 0.1 to 50 mass%, more preferably in the range of 0.5 to 40 mass% in the resin composition forming the adhesive layer 55. This enables effective improvement of adhesion between the barrier layer 52 and the adhesive layer 55 in an atmosphere including a component which induces corrosion of the barrier layer, such as an electrolytic solution.

When the adhesive layer 55 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 55 may contain a modifier having a carbodiimide group.

From the viewpoint of more suitably achieving the effect of the present disclosure, the adhesive layer 55 is preferably formed of a resin composition containing an acid-modified polypropylene and an elastomer and further containing at least one of block polypropylene or homopolypropylene. The resin composition may further contain random polypropylene, polyethylene, and the like. From the viewpoint of improving the heat resistance and the adhesion to the barrier layer 52, the adhesive layer 55 is preferably homopolypropylene modified with an acid (i.e., acid-modified homopolypropylene).

From the viewpoint of more suitably achieving the effect of the present disclosure, in the resin composition forming the adhesive layer 55, the content of the acid-modified polypropylene is preferably about 5 mass% or more, more preferably about 10 mass% or more, and still more preferably about 15 mass% or more, and is preferably about 90 mass% or less, more preferably about 80 mass% or less, and still more preferably about 70 mass% or less. Preferred ranges include from about 5 to 90 mass%, from about 5 to 80 mass%, from about 5 to 70 mass%, from about 10 to 90 mass%, from about 10 to 80 mass%, from about 10 to 70 mass%, from about 15 to 90 mass%, from about 15 to 80 mass%, and from about 15 to 70 mass%.

From the viewpoint of more suitably achieving the effect of the present disclosure, in the resin composition forming the adhesive layer 55, the content of the elastomer is preferably about 25 mass% or more, more preferably about 30 mass% or more, and still more preferably about 35 mass% or more, and is preferably about 60 mass% or less, more preferably about 55 mass% or less, and still more preferably about 50 mass% or less. Preferred ranges include from about 25 to 60 mass%, from about 25 to 55 mass%, from about 25 to 50 mass%, from about 30 to 60 mass%, from about 30 to 55 mass%, from about 30 to 50 mass%, from about 35 to 60 mass%, from about 35 to 55 mass%, and from about 35 to 50 mass%.

From the viewpoint of more suitably achieving the effect of the present disclosure, the elastomer contained in the resin composition forming the adhesive layer 55 is preferably a binary copolymer or a ternary copolymer, for example. The elastomer is also preferably a propylene-based elastomer. Examples of the propylene-based elastomer include a binary copolymer and a ternary copolymer. Examples of the binary copolymer include a propylene-ethylene copolymer elastomer and a propylene-butene copolymer elastomer; and examples of the ternary copolymer include a propylene-ethylene-butene copolymer elastomer and an ethylene-propylene-diene copolymer elastomer. Among the elastomers, the propylene-ethylene copolymer elastomer is preferred as the binary copolymer, and the propylene-ethylene-butene copolymer elastomer is preferred as the ternary copolymer.

From the viewpoint of more suitably achieving the effect of the present disclosure, in the resin composition forming the adhesive layer 55, the content of the block polypropylene is preferably about 30 mass% or more, more preferably about 35 mass% or more, and still more preferably about 40 mass% or more, and is preferably about 95 mass% or less, more preferably about 90 mass% or less, and still more preferably about 85 mass% or less. Preferred ranges include from about 30 to 95 mass%, from about 30 to 90 mass%, from about 30 to 85 mass%, from about 35 to 95 mass%, from about 35 to 90 mass%, from about 35 to 85 mass%, from about 40 to 95 mass%, from about 40 to 90 mass%, and from about 40 to 85 mass%.

From the viewpoint of more suitably achieving the effect of the present disclosure, in the resin composition forming the adhesive layer 55, the content of the homopolypropylene is preferably about 20 mass% or more, more preferably about 25 mass% or more, and still more preferably about 30 mass% or more, and is preferably about 80 mass% or less, more preferably about 75 mass% or less, and still more preferably about 70 mass% or less. Preferred ranges include from about 20 to 80 mass%, from about 20 to 75 mass%, from about 20 to 70 mass%, from about 25 to 80 mass%, from about 25 to 75 mass%, from about 25 to 70 mass%, from about 30 to 80 mass%, from about 30 to 75 mass%, and from about 30 to 70 mass%.

From the viewpoint of more suitably achieving the effect of the present disclosure, in the resin composition forming the adhesive layer 55, the content of the random polypropylene is preferably about 0 mass% or more, more preferably about 1 mass% or more, and still more preferably about 2 mass% or more, and is preferably about 30 mass% or less, more preferably about 25 mass% or less, and still more preferably about 20 mass% or less. Preferred ranges include from about 0 to 30 mass%, from about 0 to 25 mass%, from about 0 to 20 mass%, from about 1 to 30 mass%, from about 1 to 25 mass%, from about 1 to 20 mass%, from about 2 to 30 mass%, from about 2 to 25 mass%, and from about 2 to 20 mass%.

From the viewpoint of more suitably achieving the effect of the present disclosure, in the resin composition forming the adhesive layer 55, the content of the polyethylene is, for example, about 0 mass% or more, preferably about 1 mass% or more, more preferably about 2 mass% or more, and still more preferably about 3 mass% or more, and is preferably about 30 mass% or less, more preferably about 25 mass% or less, and still more preferably about 20 mass% or less. Preferred ranges include from about 0 to 30 mass%, from about 0 to 25 mass%, from about 0 to 20 mass%, from about 1 to 30 mass%, from about 1 to 25 mass%, from about 1 to 20 mass%, from about 2 to 30 mass%, from about 2 to 25 mass%, from about 2 to 20 mass%, from about 3 to 30 mass%, from about 3 to 25 mass%, and from about 3 to 20 mass%.

From the viewpoint of more suitably achieving the effect of the present disclosure, in a specific composition of the resin composition, the content of the acid-modified polypropylene is about 5 mass% or more (more preferably about 10 mass% or more, still more preferably about 15 mass% or more, and is preferably about 90 mass% or less, more preferably about 80 mass% or less, and still more preferably about 70 mass% or less; and preferred ranges include from about 5 to 90 mass%, from about 5 to 80 mass%, from about 5 to 70 mass%, from about 10 to 90 mass%, from about 10 to 80 mass%, from about 10 to 70 mass%, from about 15 to 90 mass%, from about 15 to 80 mass%, and from about 15 to 70 mass%); the content of the elastomer is about 25 mass% or more (more preferably about 30 mass% or more, and still more preferably about 35 mass% or more, and is preferably about 60 mass% or less, more preferably about 55 mass% or less, and still more preferably about 50 mass% or less; and preferred ranges include from about 25 to 60 mass%, from about 25 to 55 mass%, from about 25 to 50 mass%, from about 30 to 60 mass%, from about 30 to 55 mass%, from about 30 to 50 mass%, from about 35 to 60 mass%, from about 35 to 55 mass%, and from about 35 to 50 mass%); the content of the block polypropylene is about 30 mass% or more (more preferably about 35 mass% or more, and still more preferably about 40 mass% or more, and is preferably about 95 mass% or less, more preferably about 90 mass% or less, and still more preferably about 85 mass% or less; and preferred ranges include from about 30 to 95 mass%, from about 30 to 90 mass%, from about 30 to 85 mass%, from about 35 to 95 mass%, from about 35 to 90 mass%, from about 35 to 85 mass%, from about 40 to 95 mass%, from about 40 to 90 mass%, and from about 40 to 85 mass%); the content of the homopolypropylene is about 20 mass% or more (more preferably about 25 mass% or more, and still more preferably about 30 mass% or more, and is preferably about 80 mass% or less, more preferably about 75 mass% or less, and still more preferably about 70 mass% or less; and preferred ranges include from about 20 to 80 mass%, from about 20 to 75 mass%, from about 20 to 70 mass%, from about 25 to 80 mass%, from about 25 to 75 mass%, from about 25 to 70 mass%, from about 30 to 80 mass%, from about 30 to 75 mass%, and from about 30 to 70 mass%); the content of the random polypropylene is about 0 mass% or more (more preferably about 1 mass% or more, and still more preferably about 2 mass% or more, and is preferably about 30 mass% or less, more preferably about 25 mass% or less, and still more preferably about 20 mass% or less; and preferred ranges include from about 0 to 30 mass%, from about 0 to 25 mass%, from about 0 to 20 mass%, from about 1 to 30 mass%, from about 1 to 25 mass%, from about 1 to 20 mass%, from about 2 to 30 mass%, from about 2 to 25 mass%, and from about 2 to 20 mass%); and the content of the polyethylene is, for example, about 0 mass% or more (preferably about 1 mass% or more, more preferably about 2 mass% or more, and still more preferably about 3 mass% or more, and is preferably about 30 mass% or less, more preferably about 25 mass% or less, and still more preferably about 20 mass% or less; and preferred ranges include from about 0 to 30 mass%, from about 0 to 25 mass%, from about 0 to 20 mass%, from about 1 to 30 mass%, from about 1 to 25 mass%, from about 1 to 20 mass%, from about 2 to 30 mass%, from about 2 to 25 mass%, from about 2 to 20 mass%, from about 3 to 30 mass%, from about 3 to 25 mass%, and from about 3 to 20% by mass.) The resin composition is also preferably formed of a resin composition containing, as resins (not containing additives such as the below-described lubricants), an acid-modified polypropylene and an elastomer and further containing at least one of block polypropylene or homopolypropylene only.

In manufacturing of the exterior material 10 for electrical storage devices according to the present disclosure by laminating the adhesive layer 55 with the barrier layer 52, the heat-sealable resin layer 53 or the like, a resin film formed in advance may be used as the adhesive layer 55. A heat-sealable resin for forming the adhesive layer 55 may be formed into a film on the surface of the barrier layer 52, the heat-sealable resin layer 53 or the like by extrusion molding, coating or the like to obtain the adhesive layer 55 formed of a resin film.

The thickness of the adhesive layer 55 is preferably about 50 µm or less, about 40 µm or less, about 30 µm or less, about 20 µm or less, or about 5 µm or less. The thickness of the adhesive layer 55 is preferably about 0.1 µm or more, or about 0.5 µm or more. The thickness of the adhesive layer 55 is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm in the case of the adhesive agent exemplified for the adhesive agent layer 54 or a cured product of an acid-modified polyolefin with a curing agent. When any of the resins exemplified for the heat-sealable resin layer 53 is used, the thickness of the adhesive layer is preferably about 2 to 50 µm, more preferably about 10 to 40 µm. When the adhesive layer 55 is a cured product of a resin composition containing the adhesive agent exemplified for the adhesive agent layer 54 or an acid-modified polyolefin and a curing agent, the adhesive layer 55 can be formed by, for example, applying the resin composition and curing the resin composition by heating or the like. When the resin exemplified for the heat-sealable resin layer 53 is used, for example, extrusion molding of the heat-sealable resin layer 53 and the adhesive layer 55 can be performed.

### [Surface Coating Layer]

The outer package film of the present disclosure may optionally include a surface coating layer on, for example, the barrier layer 52 or on the optional base material layer 51 (opposite to the barrier layer 52 on the base material layer 51) for at least one of the purposes of improving the designability, electrolytic solution resistance, scratch resistance, and conformability, for example. The surface coating layer is a layer positioned as the outermost layer of the outer package film when the electrical storage device is assembled using the outer package film.

Examples of the resin for forming the surface coating layer include resins such as polyvinylidene chloride, polyester, polyamide, epoxy resin, acrylic resin, fluororesin, polyurethane, silicone resin and phenol resin, and modified products of these resins. The resin may be a copolymer of these resins or a modified product of the copolymer. Further, a mixture of these resins may be used. The resin is preferably a curable resin. That is, it is preferable that the surface coating layer includes a cured product of a resin composition containing a curable resin.

When the resin forming the surface coating layer is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a first component containing a polyol compound and a second component containing an isocyanate compound. The polyurethane is preferably a two-liquid curable polyurethane having polyol such as polyester polyol, polyether polyol or acrylic polyol as a first component, and aromatic or aliphatic polyisocyanate as a second component. Examples of the polyurethane include polyurethane containing an isocyanate compound and a polyurethane compound obtained by reacting a polyol compound with an isocyanate compound in advance. Examples of the polyurethane include polyurethane containing a polyol compound and a polyurethane compound obtained by reacting a polyol compound with an isocyanate compound in advance. Examples of the polyurethane include polyurethane obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates. It is also possible to use a multimer (e.g., a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer is formed of polyurethane, excellent electrolytic solution resistance is imparted to the exterior material for electrical storage devices.

If necessary, the surface coating layer may contain additives such as a slipping agent, a flame retardant, an anti-blocking agent, an antioxidant, a light stabilizer, a tackifier, an antistatic agent, and a pigment on at least one of the surface and the inside of the surface coating layer according to the functionality and the like to be imparted to the surface coating layer and the surface thereof. The additives are in the form of, for example, fine particles having an average particle size of about 0.5 nm to 5 µm. The average particle size of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. In addition, from the viewpoint of heat dissipation from the electrical storage device, mica is preferable. The surface of the additive may be subjected to various kinds of surface treatments such as insulation treatment and dispersibility enhancing treatment.

The method for forming the surface coating layer is not particularly limited, and examples thereof include a method in which a resin for forming the surface coating layer is applied. When the additive is added to the surface coating layer, a resin mixed with the additive may be applied.

In the present disclosure, preferably, at least one of the surface or the inside of the surface coating layer contains a lubricant, from the viewpoint of improving the conformability of the outer package film when wound around the electrode assembly. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearyl isophthalic acid amide. The slipping agents may be used alone, or may be used in combination of two or more thereof, and are preferably used in combination of two or more thereof.

When the slipping agent is present on the surface of the surface coating layer, the amount of the slipping agent present is not particularly limited, and is, for example, about 3 mg/m² or more, preferably about 4 mg/m² or more, still more preferably about 5 mg/m² or more. The amount of the slipping agent present on the surface of the surface coating layer is, for example, about 15 mg/m² or less, preferably about 14 mg/m² or less, still more preferably about 10 mg/m² or less. The amount of the slipping agent present on the surface of the surface coating layer is preferably in the range of about 3 to 15 mg/m², about 3 to 14 mg/m², about 3 to 10 mg/m², about 4 to 15 mg/m², about 4 to 14 mg/m², about 4 to 10 mg/m², about 5 to 15 mg/m², about 5 to 14 mg/m², or about 5 to 10 mg/m².

The slipping agent present on the surface of the surface coating layer may be one obtained by exuding the slipping agent contained in a resin for forming the surface coating layer, or one obtained by applying the slipping agent to the surface of the surface coating layer.

The thickness of the surface coating layer is not particularly limited as long as the above-mentioned function as the surface coating layer is performed, and it is, for example, about 0.5 to 10 µm, preferably about 1 to 5 µm.

### <2-3. Method for Manufacturing Outer Package Film>

The method for manufacturing the outer package film is not specifically limited as long as it produces a laminate in which the layers of the outer package film of the present invention are laminated, and the method may, for example, comprise the step of laminating at least the barrier layer 52 and the heat-sealable resin layer 53.

An example of the method for manufacturing the outer package film according to the present disclosure is as follows. First, a laminate including the base material layer 51, the adhesive agent layer 54 and the barrier layer 52 in this order (hereinafter, the laminate may be described as a "laminate A") is formed. Specifically, the laminate A can be formed by a dry lamination method in which an adhesive agent to be used for formation of the adhesive agent layer 54 is applied onto the base material layer 51 or the barrier layer 52, the surface of which is subjected to a chemical conversion treatment if necessary, using a coating method such as a gravure coating method or a roll coating method, and dried, the barrier layer 52 or the base material layer 51 is then laminated, and the adhesive agent layer 54 is cured.

Then, the heat-sealable resin layer 53 is laminated on the barrier layer 52 of the laminate A. When the heat-sealable resin layer 53 is laminated directly on the barrier layer 52, the heat-sealable resin layer 53 may be laminated onto the barrier layer 52 of the laminate A by a method such as a thermal lamination method or an extrusion lamination method. When the adhesive layer 55 is provided between the barrier layer 52 and the heat-sealable resin layer 53, the adhesive layer 55 and the heat-sealable resin layer 53 can be laminated by, for example, (1) an extrusion lamination method, (2) a thermal lamination method, (3) a sandwich lamination method, or (4) a dry lamination method. Examples of the (1) extrusion lamination method include a method in which the adhesive layer 55 and the heat-sealable resin layer 53 are extruded onto the barrier layer 52 of the laminate A to perform lamination (co-extrusion lamination method or tandem lamination method). Examples of the (2) thermal lamination method include a method in which separately, a laminate in which the adhesive layer 55 and the heat-sealable resin layer 53 are laminated is formed, and laminated on the barrier layer 52 of the laminate A, and a method in which a laminate in which the adhesive layer 55 is laminated on the barrier layer 52 of the laminate A is formed, and laminated to the heat-sealable resin layer 53. Examples of the (3) sandwich lamination method include a method in which the laminate A and the heat-sealable resin layer 53 are bonded to each other with the adhesive layer 55 interposed therebetween while the melted adhesive layer 55 is poured between the barrier layer 52 of the laminate A and the heat-sealable resin layer 53 formed in a sheet shape in advance. Examples of the (4) dry lamination method include a method in which an adhesive for forming the adhesive layer 55 is laminated on the barrier layer 52 of the laminate A by, for example, a method in which the adhesive agent is applied by solution coating and dried, or a method in which the applied adhesive is further baked, and on the thus-obtained adhesive layer 55, the heat-sealable resin layer 53 formed in a sheet shape in advance is laminated.

When the surface coating layer is provided, the surface coating layer is laminated on a surface of the base material layer 51 on a side opposite to the barrier layer 52. The surface coating layer can be formed by, for example, coating a surface of the base material layer 51 with the resin that forms the surface coating layer. The order of the step of laminating the barrier layer 52 on a surface of the base material layer 51 and the step of laminating the surface coating layer on a surface of the base material layer 51 is not particularly limited. For example, the surface coating layer may be formed on a surface of the base material layer 51, followed by forming the barrier layer 52 on a surface of the base material layer 51 on a side opposite to the surface coating layer.

As described above, a laminate including the surface coating layer provided if necessary, the base material layer 51, the adhesive agent layer 54 provided if necessary, the barrier layer 52, the adhesive layer 55 provided if necessary, and the heat-sealable resin layer 53 in this order is formed, and the laminate may be further subjected to a heating treatment for strengthening the bondability of the adhesive agent layer 54 and the adhesive layer 55 provided if necessary.

In the outer package film, the layers constituting the laminate may be optionally subjected to surface activation treatment, such as corona treatment, blast treatment, oxidation treatment, or ozone treatment, so as to improve the processing suitability. For example, when the surface of the base material layer 51 opposite to the barrier layer 52 is subjected to corona treatment, ink printability on the surface of the base material layer 51 can be improved.

### <3-1. Laminated Structure and Physical Properties of Electrical Storage Device Outer Packaging Material>

An electrical storage device outer packaging material 50 of the present disclosure corresponds to the outer package film 50 described above, and each of the layers is also the same. That is, in the laminate constituting the electrical storage device outer packaging material 50 of the present disclosure, a base material layer 1, an adhesive agent layer 2, a barrier layer 3, an adhesive layer 5, a heat-sealable resin layer 4, and a surface coating layer 6 correspond to the base material layer 51, the adhesive agent layer 54, the barrier layer 52, the adhesive layer 55, the heat-sealable resin layer 53, and the surface coating layer, respectively, of the laminate constituting the outer package film 50 described above.

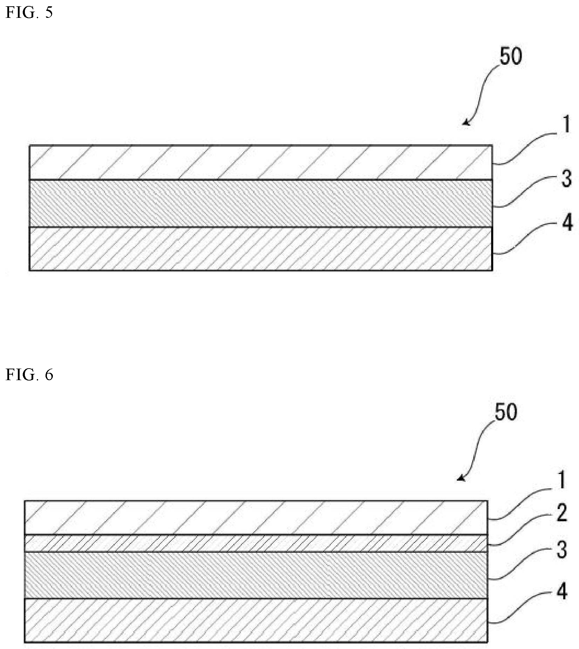

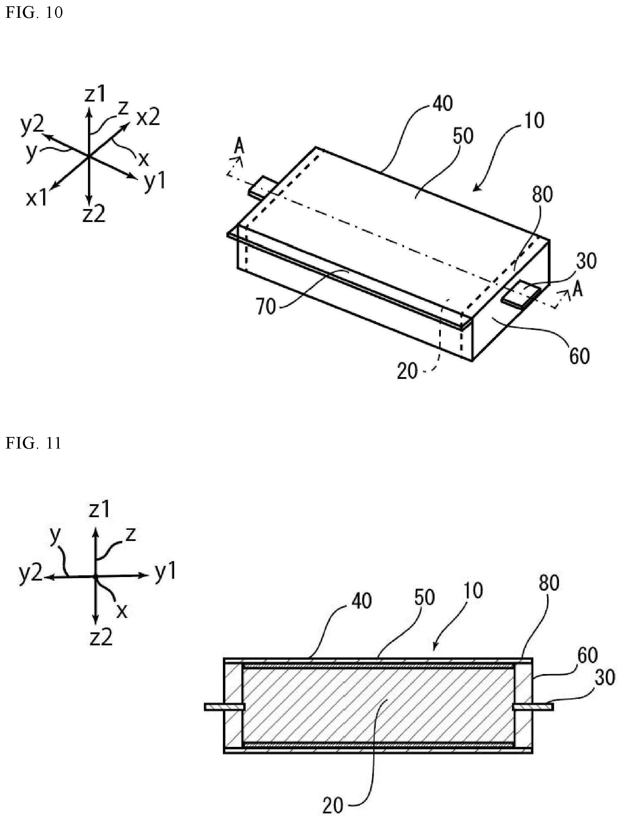

For example, as shown in FIG. 5, the electrical storage device outer packaging material 50 of the present disclosure is formed of a laminate including the barrier layer 3 and the heat-sealable resin layer 4, as in the outer package film 50. In the electrical storage device outer packaging material 50, the barrier layer 3 is the outermost layer, and the heat-sealable resin layer 4 is the innermost layer. For example, as shown in FIGS. 10 and 11, when the electrical storage device is assembled using the electrical storage device outer packaging material 50 and electrical storage device elements (such as the electrode assembly 20 and the electrode terminals 30), the electrode assembly 20 is housed together with the lids 60 in the space formed by heat-sealing edge portions of the mutually facing heat-sealable resin layers 4 of the electrical storage device outer packaging material 50. In the laminate constituting the electrical storage device outer packaging material 50 of the present disclosure, when the barrier layer 3 is used as the reference, the heat-sealable resin layer 4 side relative to the barrier layer 3 is defined as the inner side, and the opposite side is defined as the outer side.

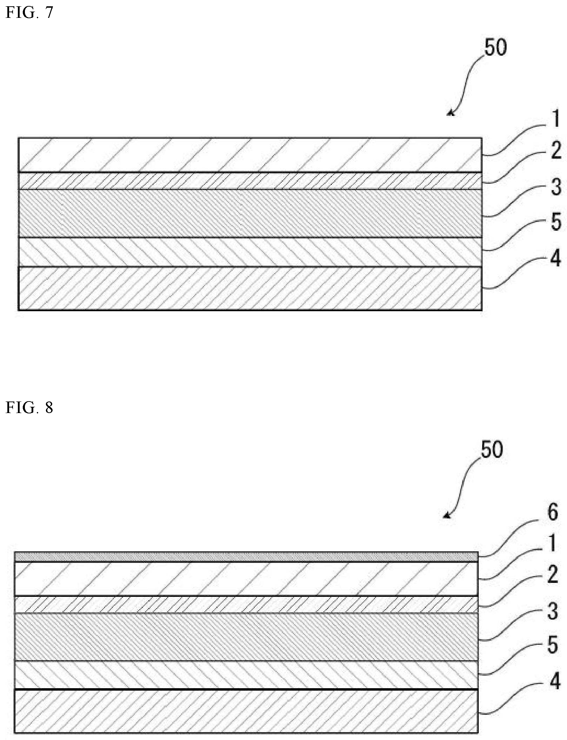

For example, as shown in FIGS. 5 to 8, the electrical storage device outer packaging material 50 may optionally include the base material layer 1 on the outer side of the barrier layer 3. Moreover, for example, as shown in FIGS. 6 to 8, the electrical storage device outer packaging material 50 may optionally include the adhesive agent layer 2 between the base material layer 1 and the barrier layer 3 for the purpose of improving the adhesiveness between these layers. Furthermore, for example, as shown in FIGS. 7 and 8, the electrical storage device outer packaging material 50 may optionally include the adhesive layer 5 between the barrier layer 3 and the heat-sealable resin layer 4 for the purpose of improving the adhesiveness between these layers. Furthermore, as shown in FIG. 8, the surface coating layer 6 or the like may be optionally provided on the outer side of the base material layer 1 (opposite to the heat-sealable resin layer 4 side).

While the thickness of the laminate constituting the electrical storage device outer packaging material 50 is not specifically limited, it is, for example, about 250 µm or less, and preferably about 190 µm or less, about 180 µm or less, about 155 µm or less, or about 120 µm or less, from the viewpoint of reducing costs or improving the energy density, for example. On the other hand, from the viewpoint of maintaining the function of the electrical storage device outer packaging material to protect the electrode assembly 20, the thickness of the laminate constituting the electrical storage device outer packaging material 50 is preferably about 35 µm or more, about 45 µm or more, or about 60 µm or more. Preferred ranges of the laminate constituting the electrical storage device outer packaging material 50 include, for example, from about 35 to 250 µm, from about 35 to 190 µm, from about 35 to 180 µm, from about 35 to 155 µm, from about 35 to 120 µm, from about 45 to 250 µm, from about 45 to 190 µm, from about 45 to 180 µm, from about 45 to 155 µm, from about 45 to 120 µm, from about 60 to 250 µm, from about 60 to 190 µm, from about 60 to 180 µm, from about 60 to 155 µm, and from about 60 to 120 µm. In particular, the range of about 60 to 155 µm is preferred in order to make the electrical storage device lighter weight and smaller in thickness, while the range of about 155 to 190 µm is preferred in order to improve the conformability.

In the electrical storage device outer packaging material 50, a ratio of the total thickness of the optional base material layer 1, the optional adhesive agent layer 2, the barrier layer 3, the optional adhesive layer 5, the heat-sealable resin layer 4, and the optional surface coating layer 6, relative to the thickness (entire thickness) of the laminate constituting the electrical storage device outer packaging material 50, is preferably 90% or more, more preferably 95% or more, and still more preferably 98% or more. As a specific example, when the electrical storage device outer packaging material 50 of the present disclosure includes the base material layer 1, the adhesive agent layer 2, the barrier layer 3, the adhesive layer 5, and the heat-sealable resin layer 4, the ratio of the total thickness of these layers relative to the thickness (entire thickness) of the laminate constituting the electrical storage device outer packaging material 50 is preferably 90% or more, more preferably 95% or more, and still more preferably 98% or more. Furthermore, when the electrical storage device outer packaging material 50 of the present disclosure is a laminate including the base material layer 1, the adhesive agent layer 2, the barrier layer 3, and the heat-sealable resin layer 4, the ratio of the total thickness of these layers relative to the thickness (entire thickness) of the laminate constituting the electrical storage device outer packaging material 50 is, for example, 80% or more, preferably 90% or more, more preferably 95% or more, and still more preferably 98% or more.

From the viewpoint of more suitably achieving the effect of the invention of the present disclosure, the electrical storage device outer packaging material 50 has a Young's modulus of preferably 6000 MPa or more, more preferably 8000 MPa or more, and still more preferably 10000 MPa or more. On the other hand, the Young's modulus is preferably 40000 MPa or less, more preferably 35000 MPa or less, and still more preferably 30000 MPa or less. Preferred ranges include from about 6000 to 40000 MPa, from about 6000 to 35000 MPa, from about 6000 to 30000 MPa, from about 8000 to 40000 MPa, from about 8000 to 35000 MPa, from about 8000 to 30000 MPa, from about 10000 to 40000 MPa, from about 10000 to 35000 MPa, and from about 10000 to 30000 MPa. In the present disclosure, the Young's modulus of the electrical storage device outer packaging material is a value measured by the following method.

### <Measurement of Young's Modulus of Electrical Storage Device Outer Packaging Material>

In accordance with JIS K6251:2017, an S-S curve in the TD direction of the adhesive film is acquired under the measurement conditions shown below, and the Young's modulus (MPa) is calculated from the maximum value of the slope of the S-S curve.

### (Measurement Conditions)

A tensile testing machine is used.
Specimen shape: dumbbell No. 7
Specimen width: 2 mm
Specimen length: 35 mm
Specimen thickness: measured with a thickness gauge
Gauge length: 20 mm
Tensile speed: 50 mm/min
Test environment: 23 ± 5°C, 50 ± 30% RH
Number of measurements: average value of three measurements

As described for the outer package film 50, increasing the Young's modulus of the barrier layer 3 is effective as a method of increasing the Young's modulus of the electrical storage device outer packaging material 50.

### <3-2. Layers Constituting Electrical Storage Device Outer Packaging Material>

As described above, in the laminate constituting the electrical storage device outer packaging material 50 of the present disclosure, the base material layer 1, the adhesive agent layer 2, the barrier layer 3, the adhesive layer 5, the heat-sealable resin layer 4, and the surface coating layer 6 correspond to the base material layer 51, the adhesive agent layer 54, the barrier layer 52, the adhesive layer 55, the heat-sealable resin layer 53, and the surface coating layer, respectively, of the laminate constituting the outer package film 50 described above. Therefore, the description of the base material layer 1, the adhesive agent layer 2, the barrier layer 3, the adhesive layer 5, the heat-sealable resin layer 4, and the surface coating layer 6 is the same as that of the base material layer 51, the adhesive agent layer 54, the barrier layer 52, the adhesive layer 55, the heat-sealable resin layer 53, and the surface coating layer of the laminate constituting the outer package film 50 described above, and thus, redundant description is omitted.

In the electrical storage device outer packaging material of the present disclosure, the barrier layer 3 of the electrical storage device outer packaging material 50 is characterized in that the ratio (R1/R2) of area average grain size R1 (µm) to area average grain size R2 (µm) is 55% or more.

As used herein, the area average grain size R1 (µm) of the barrier layer 3 is an area average grain size (µm) obtained by performing crystal analysis using EBSD on a cross section obtained by cutting the barrier layer 3 in a direction that is perpendicular to a rolling direction of the barrier layer 3 and perpendicular to a surface of the barrier layer 3, at a position where the heat-sealable resin layer 4 of the electrical storage device outer packaging material 50 and a polypropylene sheet are heat-sealed under conditions in which a thickness of the heat-sealable resin layer becomes 20% or more and 80% or less. The polypropylene sheet is intended to be the lid constituting the outer packaging. The conditions in which the thickness of the heat-sealable resin layer becomes 20% or more and 80% or less are adjusted, for example, by setting the temperature during heat sealing to about 160 to 240°C, the surface pressure to about 0.2 to 1.5 MPa, and the heat sealing time to about 1 to 12 seconds.

As used herein, the area average grain size R2 (µm) of the barrier layer 3 is an area average grain size (µm) obtained by performing crystal analysis using EBSD on a cross section obtained by cutting the barrier layer 3 in the direction that is perpendicular to the rolling direction of the barrier layer 3 and perpendicular to the surface of the barrier layer 3, at a position where the heat-sealable resin layer 4 of the electrical storage device outer packaging material 50 and the polypropylene sheet are not heat-sealed.

From the viewpoint of more suitably achieving the effect of the invention of the present disclosure, the ratio (R1/R2) is preferably about 55% or more, more preferably about 60% or more, and still more preferably about 70% or more, and is preferably about 150% or less, more preferably about 140% or less, and still more preferably about 130% or less. Preferred ranges include from about 55 to 150%, from about 55 to 140%, from about 55 to 130%, from about 60 to 150%, from about 60 to 140%, from about 60 to 130%, from about 70 to 150%, from about 70 to 140%, and from about 70 to 130%.

The area average grain size R1 (µm) and the area average grain size R2 (µm) of the barrier layer 3 are values measured by the following method. When the electrical storage device outer packaging material is obtained from the electrical storage device (for example, when the electrical storage device outer packaging material is obtained from the electrical storage device mounted on a car that has previously traveled or the like) for measuring the area average grain size R1 (µm) and the area average grain size R2 (µm) of the barrier layer 3, a sample is obtained from a portion where the heat-sealable resin layers of the electrical storage device outer packaging material are not heat-sealed, and subjected to the following measurement.

### <Measurement of Area Average Grain Sizes R1 and R2 of Barrier Layer>

From the electrical storage device, the barrier layer at the position where the heat-sealable resin layer of the electrical storage device outer packaging material and the polypropylene sheet (intended to be the lid) are heat-sealed under the conditions in which the thickness of the heat-sealable resin layer becomes 20% or more and 80% or less and the barrier layer at the position where the heat-sealable resin layer of the electrical storage device outer packaging material is not heat-sealed (non-seal portion) are obtained. The heat seal conditions are set so that the ratio of "(the thickness of the heat-sealable resin layer at the position where the heat-sealable resin layer is heat-sealed to the lid)/(the thickness of the heat-sealable resin layer at the position where the heat-sealable resin layer is not heat-sealed to the lid)" becomes 20 to 80%. Specifically, the electrical storage device outer packaging material is cut into a rectangular shape having a size of 360 mm in MD × 160 mm in TD. As the lids of the outer packaging, lids made of polypropylene (polypropylene sheet) having a cuboid shape (100 mm in length × 30 mm in width × 5 mm in thickness) are provided. Additionally, a block made of aluminum having a cuboid shape (140 mm in length × 98 mm in width × 28 mm in thickness) is provided as a simulated electrode assembly. Next, as shown in the schematic view of FIG. 1, the lids are disposed on both sides of the electrode assembly in the length direction, the resulting structure is wrapped with the electrical storage device outer packaging material, and the position where the heat-sealable resin layers of the electrical storage device outer packaging material face each other (first seal portion 70) and the position where the heat-sealable resin layer of the electrical storage device outer packaging material and the lid are in contact with each other (second seal portion 80) are each heat-sealed using a heat seal bar, thus obtaining a simulated electrical storage device. The simulated electrical storage device does not have the electrode terminals as shown in FIG. 1. The seal width of the position where the heat-sealable resin layers of the electrical storage device outer packaging material face each other (first seal portion 70) is 10 mm. The seal width of the position where the heat-sealable resin layer of the electrical storage device outer packaging material and the lid are in contact with each other (second seal portion 80) is the thickness (10 mm) of the lid. The heat seal conditions (temperature, surface pressure, and time) for the second seal portion 80 are such that the thickness of the heat-sealable resin layer becomes 20% or more and 80% or less. Next, crystal analysis using EBSD is performed on the barrier layers from the simulated electric storage device to measure the area average grain sizes R1 and R2 of the barrier layers. The measurement method is specifically as follows.

Crystal analysis using EBSD is performed on a cross section of each barrier layer in the direction perpendicular to the rolling direction to measure the area average grain size of the barrier layer. Details of the measurement conditions are as follows. The area average grain size is the diameter when the area calculated by [(measurement region - regions with a CI value below 0.1)/number of crystals] is assumed to be a circle, and is the area average grain size of crystals included in a measurement region of about 5000 µm² or more obtained by connecting a plurality of images acquired by the crystal analysis using EBSD. The maximum grain size is the value measured for the largest crystal of the crystals included in the measurement region based on the assumption that the shapes of the crystals are circles. The standard deviation of the grain size is calculated from the distribution of the grain sizes of the crystals (diameters when the crystal areas are assumed to be circles) included in a measurement region of about 5000 µm² or more (the entire region of the barrier layer in the thickness direction is used as the measurement region) obtained by connecting a plurality of images acquired by the crystal analysis using EBSD, after removing the regions with a CI value below 0.1. The area average grain size R2 of the barrier layer is measured at a position 3 cm away from the measurement position of the area average grain size R1.

### (Measurement Apparatus)

A Schottky field emission scanning electron microscope equipped with an EBSD detector is used as the apparatus.

### (Pre-Processing)

As pre-processing, the barrier layer is cut in the direction perpendicular to the rolling direction (RD) to obtain a cross section. The rolling direction of the barrier layer is a direction in which linear rolling marks extend when the glossy surface of the barrier layer is observed with a metallurgical microscope. A specific procedure is as follows: Initially, the barrier layer for use as a sample is cut into 5 mm (direction perpendicular to the rolling direction) × 10 mm (rolling direction) with a trimming razor blade and then embedded in resin. Next, using the trimming razor blade, the barrier layer is cut together with the resin in the direction perpendicular to the rolling direction of the barrier layer and perpendicular to the surface of the barrier layer, to expose a cross section of the barrier layer. Next, the obtained cross section is trimmed using a microtome. This trimming is performed by using the microtome to cut the cross section together with the embedding resin by about 1 mm in the direction perpendicular to the cross section, in order to reduce mechanical strain of the cross-sectional shape. Next, using an ion milling apparatus, the cross section is irradiated with a broad argon beam in the direction perpendicular to the cross section, at a protrusion width of 50 µm and a voltage of 6 kV for 4 hours, to prepare a measurement cross section. This operation is to precisely expose the cross section of the barrier layer, so as to minimize the mechanical damage into the crystal structure occurred in the previous step. In the present disclosure, the "direction perpendicular" when cutting the aluminum alloy foil may include an error of about 10°, because the cutting is performed while observing under a stereomicroscope. Specifically, the direction perpendicular to the rolling direction includes a tolerance of 80 to 100° with respect to the rolling direction, and the direction perpendicular to the surface includes a tolerance of 80 to 100° with respect to the surface.

### (SEM Conditions)

The conditions for the scanning electron microscope (SEM) used in EBSD are as follows:
Observation magnification: 2000 times (the observation magnification standard for imaging is Polaroid 545)
Acceleration voltage: 15 kV
Working distance: 15 mm
Sample tilt angle: 70°

### (EBSD Conditions)

The conditions for the crystal analysis using EBSD are as follows:
Step size: 150 nm

### Analysis conditions:

The crystal orientation analysis software OIM (Ver 7.3) from TSL Solutions K.K. is used to perform the following analysis.

A plurality of images are connected to obtain a measurement region of about 5000 µm² or more. The upper limit of the measurement region is about 30000 µm² or less, for example. Here, the region from the center to both edges of the barrier layer in the thickness direction is defined as the measurement region. Any portion of the cross section where the resin is attached or where the acid resistance film is present is excluded from the measurement region.

The CI value is set to 0.1 or more, the grain boundary condition is set to 0.5 degrees or more, and the minimum grain size is set to 3 steps or more.

After the images are connected, a pole figure is observed.

When the center of the pole figure is displaced 10° or more, the crystal data is rotated to adjust the symmetry. A pole figure to be used here for reference is measured from the sample surface by XRD. When obtaining a pole figure from the surface by EBSD, the sample surface is subjected to mechanical polishing, flat milling, electropolishing, or the like in order to eliminate the mechanical influence on the crystal structure of the sample surface, and then subjected to wide-area measurement. Then, the pole figure obtained in the surface direction is rotated 90° so as to be the same as that obtained in the same orientation as the orientation of the pole figure obtained from the cross section of the sample of interest. This pole figure is used for reference.

Data whose CI value (Confidence Index: CI value) defined by the crystal orientation analysis software OIM (Ver 7.3) from TSL Solutions K.K. is below 0.1 is excluded, and then the analysis is performed. In this manner, data based on the resin used for the pre-processing that is present on the front and back surfaces of the sample, grain boundaries present in the cross section, or amorphous portions can be excluded.

Each of the area average grain size R1 (µm) and the area average grain size R2 (µm) of the barrier layer 3 can be adjusted by adjusting the material constituting the barrier layer 3, the thickness of the barrier layer 3, and the like.

For example, increasing the Young's modulus of the barrier layer 3 (i.e., increasing the Young's modulus of the electrical storage device outer packaging material 50) can increase the ratio (R1/R2) of area average grain size R1 (µm) to area average grain size R2 (µm) of the barrier layer 3. Preferable Young's moduli of the barrier layer 3 will be described later. For example, increasing the thickness of the barrier layer 3 or using a high-strength metal is effective.

Moreover, for example, when the barrier layer 3 is formed of an aluminum alloy foil, and when using an aluminum alloy composition of the JIS standard 8000 series, the strength can be increased by adding a small amount of Si to the aluminum base metal. Furthermore, when using an aluminum alloy composition of the JIS standard 5000 series, the strength of the soft foil can be increased by solid solution strengthening, by forming a solid solution of Mg in aluminum.

Refining the grains of the metal forming the barrier layer 3 is also effective to increase the ratio (R1/R2). For example, in the case of an aluminum alloy composition of the JIS standard 8000 or 5000 series, an Al-Fe-based intermetallic compound crystallizes out during casting and serves as a nucleus to refine the grains. Furthermore, when employing differential speed rolling (a method of rolling with rolls with different peripheral speeds), the rolled material undergoes shear deformation over the entire sheet thickness in addition to normal rolling deformation. As a result, the crystal rotation is promoted, which promotes a change from the sub-grain boundary to the large-angle grain boundary, resulting in the formation of finer grains. This method is effective with cold working, but is more effective with warm working. Furthermore, increasing the number of rolling passes in hot rolling of the aluminum alloy foil or increasing the final cold rolling reduction is also effective. As the final cold rolling reduction from after intermediate annealing to the final thickness increases (for example, 80% or more), the amount of strain accumulated in the aluminum alloy foil increases, and the recrystallized grains after final annealing are refined.

As the rolling conditions for the aluminum foil, conditions such as rolling reduction, heating temperature, and heating time are adjusted. For example, an exemplary method includes the steps of subjecting aluminum metal or an aluminum alloy ingot to a homogenization treatment at about 500 to 600°C for about 1 to 2 hours; hot rolling; cold rolling; intermediate annealing in which the material is held at about 300 to 450°C for about 1 to 10 hours; cold rolling in which rolling is performed at a rolling reduction of 80% or more, preferably 90% or more, from after the intermediate annealing to final rolling; and final annealing in which the material is held at about 250 to 400°C for about 30 to 100 hours. However, the conditions for refining the grains are not limited thereto.

### <3-3. Method for Manufacturing Electrical Storage Device Outer Packaging Material>

As described above, the electrical storage device outer packaging material 50 of the present disclosure corresponds to the outer package film 50, and the method of manufacture is also the same; thus, the description thereof is omitted.

### <3-4.Uses of exterior material for electrical storage devices>

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices according to the present disclosure, an electrical storage device element including at least a positive electrode, a negative electrode, and an electrolyte can be housed to obtain an electrical storage device. In other words, the electrical storage device element can be wrapped with the exterior material for electrical storage devices of the present disclosure to form an electrical storage device.

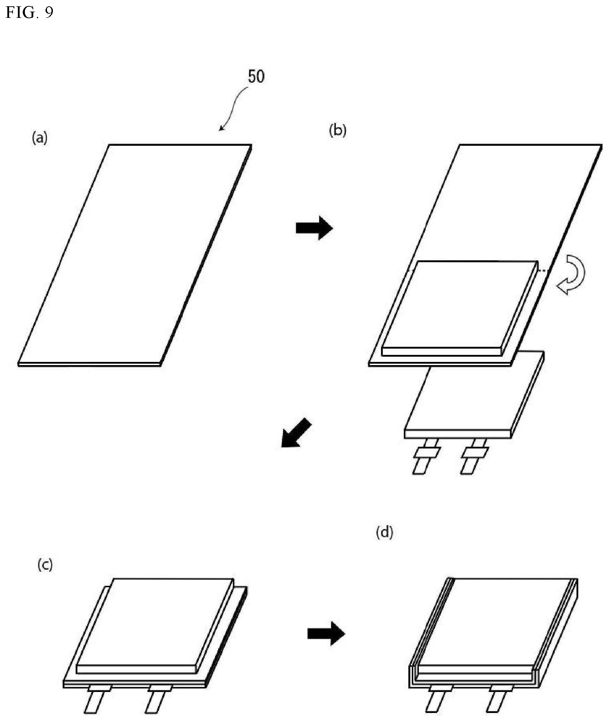

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral portions of the superposed exterior materials for electrical storage devices to form a packaging. Alternatively, as in the example shown in Fig. 9, one exterior material for electrical storage devices may be folded over itself, followed by heat-sealing the peripheral portions to form a packaging. When the exterior material is folded over itself, a packaging may be formed by three-side sealing with the exterior material heat-sealed at sides other than the folding side as in the example shown in Fig.9, or may be subjected to four-side sealing with the exterior material folded in such a manner that a flange portion can be formed. Note that, when the innermost layer and the outermost layer of the exterior material for electrical storage devices are heat-sealable resin layers, the heat-sealable resin layer of the innermost layer and the heat-sealable resin layer of the outermost layer may be heat-sealed to form a packaging. In addition to the preferred embodiment in which the facing surfaces of the electrical storage device outer packaging material are heat-sealed, an embodiment in which an outer surface and an inner surface of the electrical storage device outer packaging material are heat-sealed is also preferred.

Furthermore, in the electrical storage device outer packaging material, a concave portion for housing the electrical storage device element may be formed by deep drawing or bulging. As in the example shown in FIG. 9, a concave portion may be provided in one sheet of the electrical storage device outer packaging material, but not in the other sheet. Alternatively, a concave portion may also be provided in the other sheet of the electrical storage device outer packaging material.

In the electrical storage device outer packaging material of the present disclosure, in an electrical storage device that employs an outer packaging including the electrical storage device outer packaging material that wraps an electrode assembly, and a lid, formation of a crack in a seal portion of the electrical storage device outer packaging material to the lid is inhibited when the electrical storage device is repeatedly exposed to temperature changes between high and low temperatures. Therefore, the electric storage device element may be sealed with the lid in addition to the electrical storage device outer packaging material. That is, the electrical storage device outer packaging material and the lid constitute an outer packaging (outer packaging for an electrical storage device) that seals the electrical storage device element. For example, the electrical storage device element may be housed inside the electrical storage device outer packaging material formed in a tubular shape, and the openings may be closed with the lids. In still another example, the electrical storage device element connected to the lids may be housed inside the electrical storage device outer packaging material that is formed in a tubular shape so that openings are formed, and the openings may be closed with the lids. The lids and the electrical storage device outer packaging material are preferably joined by any means. From the viewpoint of reducing the dead space between the electrical storage device element and the electrical storage device outer packaging material in order to improve the volume energy density of the electrical storage device, the electrical storage device outer packaging material is preferably wound around the electrical storage device element and the lids. When winding the electrical storage device outer packaging material around the electrical storage device element and the lids, the electrical storage device outer packaging material may be wound in a single layer only, or a plurality of layers.

As described above, the lid may be formed of, for example, a resin molded article, a metal molded article, the electrical storage device outer packaging material, or a combination thereof. In the present disclosure, when the lid is described as a resin molded article, the present disclosure does not include an embodiment in which the lid is formed only of the films as specified in the [Packaging Vocabulary] standard of the Japanese Industrial Standard (JIS). When the lid is a metal molded article, the lid also serves as a metal terminal, and thus the metal terminal may be omitted. The lid may contain a resin material and a conductive material.

The following provides a detailed description of an embodiment in which the electrical storage device is an electrical storage device comprising an electrode assembly and an outer packaging that seals the electrode assembly, wherein the outer packaging comprises the electrical storage device outer packaging material of the present disclosure that wraps the electrode assembly and a lid that seals the electrode assembly together with the electrical storage device outer packaging material.

Like FIG. 1, FIG. 10 is a perspective view schematically showing the electric storage device 10. FIG. 11 is a cross-sectional view taken along line A-A of FIG. 1. In FIGS. 10 to 12, the direction of arrow z (z1 and z2 directions) indicates the thickness direction of the electrical storage device 10, the direction of arrow x (x1 and x2 directions) indicates the width direction of the electrical storage device 10, and the direction of arrow y (y1 and y2 directions) indicates the depth direction of the electrical storage device 10. The directions indicated by the arrows x, y, and z are the same in the subsequent drawings.

As described above, the electrical storage device 10 includes an electrode assembly 20, electrode terminals 30, and an outer packaging 40. The electrode assembly 20 includes electrodes (a positive electrode and a negative electrode), a separator, and the like constituting an electrical storage member, such as, for example, a lithium ion battery, a capacitor, an all-solid-state battery, a semi-solid-state battery, a quasi-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or a condenser. In the present disclosure, the electrode assembly 20 has, for example, a substantially cuboid shape. The "substantially cuboid" includes not only a perfect cuboid but also, for example, a solid that can be regarded as a cuboid by modifying the shape of a portion of the outer surface. The electrode assembly 20 may have, for example, a cylindrical shape or a polygonal prism shape.

As in FIGS. 1 and 2, the electrical storage device 10 in FIGS. 10 and 11 includes two electrode terminals 30. The electrode terminals 30 are metal terminals used for input and output of electric power to and from the electrode assembly 20. One end of each electrode terminal 30 is electrically connected to an electrode (a positive or negative electrode) included in the electrode assembly 20. For example, the other end of the electrode terminal 30 protrudes outside from an edge of the outer packaging 40. As long as the electrode terminal 30 can input and output electric power to and from the electrode assembly 20, the electrode terminal 30 may not protrude from the outer packaging 40, for example. For example, when the below-described lid 60 contains a conductive material, the lid 60 may also serve as the electrode terminal 30. In this case, the lid 60 that serves as an electrode terminal may or may not protrude from the outer packaging 40.

As described above, examples of metal materials constituting the electrode terminals 30 include aluminum, nickel, and copper. For example, when the electrode assembly 20 is a lithium ion battery, the electrode terminal 30 connected to the positive electrode is typically formed of aluminum or the like, and the electrode terminal 30 connected to the negative electrode is typically formed of copper, nickel, or the like. The outermost layer of the electrode assembly 20 may not necessarily be an electrode, and may be, for example, a protective tape or a separator. The outer shape of the electrode assembly 20 is, for example, cuboid.

As described above, the outer packaging 40 seals the electrode assembly 20. The outer packaging 40 includes the electrical storage device outer packaging material 50 and the lids 60. The electrical storage device outer packaging material 50 wraps the electrode assembly 20. In FIGS. 10 and 11, the electrical storage device outer packaging material 50 is wound around the electrode assembly 20, as in FIGS. 1 and 2. The lids 60 are disposed on sides of the electrode assembly 20 in the y direction. In another example, the electrode assembly 20 may be housed inside the electrical storage device outer packaging material 50 that is formed in a tubular shape so that openings are formed at both ends in the y direction, and the openings may be closed with the lids 60. In still another example, the electrode assembly 20 connected to the lids 60 may be housed inside the electrical storage device outer packaging material 50 that is formed in a tubular shape so that openings are formed, and the openings may be closed with the lids 60.

As described above, the outer packaging 40 has a pair of main surfaces and a pair of side surfaces formed by the electrical storage device outer packaging material 50. In FIGS. 10 and 11, as in FIGS. 1 and 2, the pair of main surfaces have substantially the same size. Likewise, the pair of side surfaces have substantially the same size. Each of the pair of main surfaces has an area larger than that of each of the pair of side surfaces. The pair of lids 60 are disposed on the respective sides of the electrode assembly 20 so as to close the pair of openings. In the present disclosure, the main surfaces and the side surfaces are the surfaces of the outer packaging 40 excluding the lids 60.

As described above, for example, there is a method in which a housing portion (recess) for housing the electrode assembly 20 is formed in the electrical storage device outer packaging material 50 by cold molding. However, forming a deep housing portion by this method is not necessarily easy. Trying to form a deep (for example, a molding depth of 15 mm) housing portion (recess) by cold molding may cause a pinhole or a crack to form in the electrical storage device outer packaging material 50, increasing the possibility of lowering the battery performance. On the other hand, the outer packaging 40 seals the electrode assembly 20 by winding the electrical storage device outer packaging material 50 around the electrode assembly 20, so that the electrode assembly 20 can be easily sealed regardless of the thickness of the electrode assembly 20. For reducing the dead space between the electrode assembly 20 and the electrical storage device outer packaging material 50 in order to improve the volume energy density of the electrical storage device 10, the electrical storage device outer packaging material 50 is preferably wound to be in contact with an outer surface of the electrode assembly 20. Also considering that in an all-solid-state battery, a high pressure needs to be uniformly applied from an outer surface of the battery to achieve battery performance, any space between the electrode assembly 20 and the electrical storage device outer packaging material 50 needs to be eliminated; therefore, the electrical storage device outer packaging material 50 is preferably wound around the electrode assembly 20 to be in contact with the outer surface of the electrode assembly 20.

The electrical storage device outer packaging material 50 is a laminate (laminated film) including at least a barrier layer 3 and a heat-sealable resin layer 4. The details of each layer included in the electrical storage device outer packaging material 50 are as described above.

As described above, the lid 60 may have a desired shape, such as a cylindrical shape, a prism shape, a cuboid shape, or a cube shape, and contains a resin material, for example. As used herein, "contains a resin material" means that the content of the resin material is 50 mass% or more, preferably 80 mass% or more, more preferably 90 mass% or more, and still more preferably 95 mass% or more, based on the total amount of the material constituting the lid 60 taken as 100 mass%. That is, the material constituting the lid 60 may contain a material other than the resin material in addition to the resin material.

Specific examples of the resin in the lid 60 are as described above.

As described above, the resin serving as the resin material may optionally contain a filler. Specific examples of the filler are as described above.

As described above, the melt mass flow rate (measurement temperature: 230°C) of the resin material contained in the material constituting the lid 60 is preferably in the range of 1 g/10 min to 100 g/10 min, preferably in the range of 1 g/10 min to 80 g/10 min, preferably in the range of 1 g/10 min to 60 g/10 min, preferably in the range of 5 g/10 min to 100 g/10 min, preferably in the range of 5 g/10 min to 80 g/10 min, and more preferably in the range of 5 g/10 min to 60 g/10 min. The melt mass flow rate is measured based on JIS K7210-1:2014.

As described above, the lid 60 may contain a conductive material. As used herein, "contain a conductive material" means that the content of the conductive material is 50 mass% or more, preferably 80 mass% or more, more preferably 90 mass% or more, and still more preferably 95 mass% or more, based on the total amount of the material constituting the lid 60 taken as 100 mass%. That is, the material constituting the lid 60 may contain a material other than the conductive material in addition to the conductive material.

As described above, the conductive material constituting the lid 60 is, for example, a metal material. Examples of the metal material constituting the lid 60 include aluminum, aluminum alloys, nickel, copper, and copper alloys. For example, when the electrode assembly 20 is a lithium ion battery, the lid 60 connected to the positive electrode is preferably formed of aluminum or an aluminum alloy. The lid 60 connected to the negative electrode is preferably formed of nickel, copper, or a copper alloy. The material constituting the lid 60 connected to the negative electrode may be nickel-plated copper. The material constituting the lid 60 may include a recycled metal material. When the lid 60 contains a conductive material, the lid 60 also serves as the electrode terminal 30; thus, the electrode terminal 30 may be omitted in the electrical storage device 10.

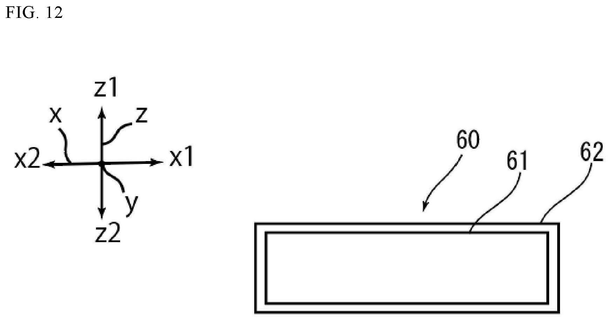

As described above, the lid 60 may have a structure in which at least a portion of a lid main body 61 is covered with a cover 62. In the lid 60 of FIG. 12, the periphery (the periphery of the thickness portion) of the lid main body 61 is covered with the cover 62. The lid 60 may be joined to the heat-sealable resin layer 4 of the electrical storage device outer packaging material 50 with the cover 62 interposed therebetween. The cover 62 preferably contains a resin material. The lid 60 may include the lid main body 61 and the cover 62 that joins the lid main body 61 to the electrical storage device outer packaging material 50, and the cover 62 may contain a resin (resin material). The definition of "contain a resin material" for the cover 62 is the same as that used for the lid 60.

As described above, when the lid 60 contains a conductive material, the lid main body 61 may be formed of the conductive material, and at least a portion of the lid main body 61 may be covered with the cover 62.

As described above, when the lid 60 contains a conductive material, the lid 60 may be joined to the electrical storage device outer packaging material 50 with an adhesive film, instead of the cover, interposed therebetween. Any adhesive film can be selected as long as it is a film capable of bonding the electrical storage device outer packaging material 50 and the lid 60. The adhesive film is preferably a laminated film including at least a heat-sealable resin layer, a heat-resistant base material layer, and a heat-sealable resin layer in this order. The description of the heat-sealable resin layer 4 can apply to the heat-sealable resin layers of the adhesive film. The materials constituting the heat-sealable resin layers on both sides of the adhesive film may be the same or different, and are appropriately selected to match the material constituting the heat-sealable resin layer 4 of the electrical storage device outer packaging material 50 and the material constituting the lid 60. The material constituting the heat-sealable resin layer on the side of the adhesive film to be bonded to the lid 60 is preferably an acid-modified polyolefin-based resin obtained by graft-modification with an acid such as maleic anhydride. The heat-sealable resin layer on the side of the adhesive film to be bonded to the electrical storage device outer packaging material 50 is preferably formed of the same material as that of the heat-sealable resin layer 4 of the electrical storage device outer packaging material 50.

As described above, the heat-resistant base material layer may be any film that is formed of a heat-resistant resin, and may be, for example, an unstretched or stretched film of polyethylene terephthalate, polyethylene naphthalate, polyphenylene sulfide, polymethylpentene (registered trademark), polyacetal cyclic polyolefin, polyethylene, polypropylene, or the like. Polyethylene terephthalate is particularly preferred because of its low cost and high strength.

As described above, the adhesive film preferably has tackiness. When the below-described second seal portion 80 is formed with the adhesive film being disposed between the electrical storage device outer packaging material 50 and the lid 60, the adhesive film is less likely to be displaced with respect to the lid 60 and the electrical storage device outer packaging material 50. When the heat-sealable resin layers of the adhesive film contain a tackifying resin, tackiness can be imparted to the adhesive film. The tackifying resin may be, for example, an amorphous polyolefin. Examples of the amorphous polyolefin include amorphous polypropylene and a copolymer of amorphous propylene with another α-olefin. The content of the tackifying resin relative to the base material constituting the heat-sealable resin is preferably 10 to 20 weight% or less.

As described above, the lid 60 includes a first main surface located on the inner side (the electrode assembly 20 side) of the electrical storage device, a second main surface located on the outer side of the electrical storage device, and four side surfaces to be heat-sealed to the heat-sealable resin layer 4 of the electrical storage device outer packaging material 50. The first main surface faces the electrode assembly 20. The second main surface is a surface opposite to the first main surface.

As described above, when the lid 60 has a cylindrical shape, a prism shape, a cuboid shape, a cube shape, or the like, the lid 60 preferably has a certain thickness in the thickness direction (y direction) so as to inhibit deformation of the outer packaging 40 even when electrical storage devices 10 are stacked on one another. From another viewpoint, when the lid 60 has a cylindrical shape, a prism shape, a cuboid shape, a cube shape, or the like, the lid 60 preferably has a certain thickness in the thickness direction (y direction) so as to allow a lid joint portion of the lid 60 and the outer package film 50 to be suitably joined when the second seal portion 80 is formed. The minimum value of the thickness in the thickness direction (y direction) (the distance in the y direction between the first main surface and the second main surface) of the lid 60 is, for example, 1.0 mm, more preferably 3.0 mm, and still more preferably 4.0 mm. The maximum value of the thickness in the y direction of the lid 60 is, for example, 20 mm, more preferably 15.0 mm, still more preferably 10.0 mm, even more preferably 8.0 mm, and still more preferably 7.0 mm. The maximum value of the thickness in the y direction of the lid 60 may be 10 mm or more. The thickness of the material constituting the lid 60 is preferably in the range of 1.0 mm to 20.0 mm, 1.0 mm to 15.0 mm, 1.0 mm to 10.0 mm, 1.0 mm to 8.0 mm, 1.0 mm to 7.0 mm, 3.0 mm to 20.0 mm, 3.0 mm to 15.0 mm, 3.0 mm to 10.0 mm, 3.0 mm to 8.0 mm, 3.0 mm to 7.0 mm, 4.0 mm to 20.0 mm, 4.0 mm to 15.0 mm, 4.0 mm to 10.0 mm, 4.0 mm to 8.0 mm, and 4.0 mm to 7.0 mm. In the present disclosure, when the lid 60 is described as having a cylindrical shape, a prism shape, a cuboid shape, a cube shape, or the like, the present disclosure does not include an embodiment in which the lid 60 is formed only of the films as specified in the [Packaging Vocabulary] standard of the Japanese Industrial Standard (JIS). The thickness of the lid 60 may vary depending on the portion of the lid 60. When the thickness of the lid 60 varies depending on the portion, the thickness of the lid 60 refers to the thickness of the thickest portion.

As in FIGS. 1 and 2, in FIGS. 10 and 11, the lid 60 has a through-hole into which the electrode terminal 30 is inserted. The through-hole penetrates the first main surface and the second main surface of the lid. In a state where the electrode assembly 20 is housed, the electrode terminal 30 passes through the through-hole formed in the lid 60 and protrudes outside the outer packaging 40. A slight gap between the through-hole of the lid 60 and the electrode terminal 30 is filled with, for example, a resin. In the electrical storage device 10, any position can be selected as the position where the electrode terminal 30 protrudes outside. For example, the electrode terminal 30 may protrude outside from a hole formed in any of the six surfaces of the outer packaging 40. In this case, a slight gap between the outer packaging 40 and the electrode terminal 30 is filled with, for example, a resin. The electrode terminal 30 may protrude from between the lid 60 and the electrical storage device outer packaging material 50, or may protrude from the below-described first seal portion 70. In the electrical storage device 10, the lid 60 and the electrode terminal 30 are provided as separate parts; however, the lid 60 and the electrode terminal 30 may be integrally formed. When the electrode terminal 30 does not protrude from the edge of the outer packaging 40, the through-hole may not be formed in the lid 60.

As in FIGS. 1 and 2, in FIGS. 10 and 11, in a state where the electrical storage device outer packaging material 50 is wound around the electrode assembly 20, the facing surfaces (heat-sealable resin layers 4) of the electrical storage device outer packaging material 50 are heat-sealed to form the first seal portion 70.

As described above, the first seal portion 70 is formed by heat-sealing the heat-sealable resin layers of the electrical storage device outer packaging material 50. The first seal portion 70 extends in the longitudinal direction of the outer packaging 40. In the outer packaging 40, any position can be selected as the position where the first seal portion 70 is formed. As in FIG. 1, as shown in FIG. 10, the basal portion of the first seal portion 70 is preferably located on the edge of the boundary between the main surface and the side surface of the outer packaging 40. The basal portion of the first seal portion 70 may be located on any surface of the outer packaging 40. As in FIG. 1, in FIG. 10, the first seal portion 70 extends outside the electrode assembly 20 in plan view. For example, the first seal portion 70 may be folded toward the side surface or main surface of the outer packaging 40.

As described above, the heat-sealable resin layer 4 of the electrical storage device outer packaging material 50 and the lid joint portion of the lid 60 (the portion where the heat-sealable resin layer 4 of the electrical storage device outer packaging material 50 and the lid 60 are in contact with each other) are joined to each other by, for example, heat sealing, such that the second seal portion 80 is formed. The electrical storage device outer packaging material 50 and the lid 60 can be joined by any method such as welding.

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all-polymer batteries, lead storage batteries, nickel-hydrogen storage batteries, nickelcadmium storage batteries, nickel-iron storage batteries, nickel-zinc storage batteries, silver oxide-zinc storage batteries, sodium-ion battery, metal-air batteries, polyvalent cation batteries, condensers and capacitors. Of these secondary batteries, preferred subjects to which the exterior material for electrical storage devices according to the present disclosure is applied include lithium ion batteries, lithium ion polymer batteries, and all-solid-state batteries.

### Examples

The present disclosure will be described in detail below with reference to examples and comparative examples; however, the present disclosure is not limited to the examples.

### <Method for Manufacturing Outer Package Film>

### Comparative Example 1A

As a base material layer, a laminate of a biaxially stretched polyethylene terephthalate (PET) film (thickness: 12 µm) and a stretched nylon (ONy) film (thickness: 15 µm) bonded with an adhesive agent layer (formed of a two-component curable urethane adhesive and having a thickness of 3 µm after curing) was provided. As a barrier layer, an aluminum foil (JIS H4160:1994 A8079H-O (thickness: 40 µm)) was provided. Both surfaces of the aluminum foil had been subjected to chemical conversion treatment. The chemical conversion treatment of the aluminum foil was performed by applying a treatment solution containing a phenol resin, a chromium fluoride compound, and phosphoric acid to both surfaces of the aluminum foil by roll coating such that the amount of chromium applied was 10 mg/m² (dry mass), and baking.

Next, the base material layer and the barrier layer were bonded with the adhesive agent layer (thickness: 3 µm) by dry lamination using the two-component curable urethane adhesive, to prepare a laminate sequentially having the base material layer/the adhesive agent layer/the barrier layer.

Next, maleic anhydride-modified polypropylene for forming an adhesive layer (thickness: 40 µm) and random polypropylene for forming a heat-sealable resin layer (thickness: 40 µm) were co-extruded on the barrier layer of each laminate obtained above to laminate the adhesive layer/the heat-sealable resin layer on the barrier layer. Next, the resulting laminate was aged and heated to obtain an outer package film formed of a laminate sequentially having the base material layer/the adhesive agent layer/the barrier layer/the adhesive layer/the heat-sealable resin layer.

### Comparative Example 2A

An outer package film formed of a laminate sequentially having the base material layer/the adhesive agent layer/the barrier layer/the adhesive layer/the heat-sealable resin layer was obtained as in Comparative Example 1A, except that an aluminum foil (JIS H4160:1994 A8079H-O (thickness: 60 µm)) was used as the barrier layer.

### Example 1A

An outer package film formed of a laminate sequentially having the base material layer/the adhesive agent layer/the barrier layer/the adhesive layer/the heat-sealable resin layer was obtained as in Comparative Example 1A, except that an aluminum foil (JIS H4160:1994 A8079H-O (thickness: 80 µm)) was used as the barrier layer.

### Example 2A

An outer package film formed of a laminate sequentially having the base material layer/the adhesive agent layer/the barrier layer/the adhesive layer/the heat-sealable resin layer was obtained as in Comparative Example 1A, except that a stainless steel foil (JIS G4303 SUS304 (thickness: 60 µm)) was used as the barrier layer.

### Example 3A

The same outer package film as that of Comparative Example 1A was used. In the thermal shock test described below, the material of the lid of the outer packaging used for a simulated electrical storage device was different from that of Comparative Example 1A.

### Example 4A

The same outer package film as that of Comparative Example 1A was used. In the thermal shock test described below, the material of the lid of the outer packaging used for a simulated electrical storage device was different from those of Comparative Example 1A and Example 3A.

### <Measurement of Area Average Grain Sizes R1 and R2 of Barrier Layer>

A simulated electrical storage device was produced in the same manner as the simulated electrical storage device produced in <Thermal Shock Test> described below. Next, from the simulated electrical storage device, the barrier layer at the position where the heat-sealable resin layer of the outer package film was heat-sealed to the lid (seal portion (second seal portion)) and the barrier layer at the position where the heat-sealable resin layer of the outer package film was not heat-sealed (non-seal portion) were obtained, and crystal analysis using EBSD was performed on each barrier layer to measure the area average grain size R1 or R2 of the barrier layer. The measurement method was specifically as follows.

Crystal analysis using EBSD was performed on a cross section of each barrier layer in the direction perpendicular to the rolling direction to measure the area average grain size of the barrier layer. Details of the measurement conditions were as follows. The measurement results are shown in Table 1A. The area average grain size is the diameter when the area calculated by [(measurement region - regions with a CI value below 0.1)/number of crystals] is assumed to be a circle, and is the area average grain size of crystals included in a measurement region of about 5000 µm² or more obtained by connecting a plurality of images acquired by the crystal analysis using EBSD. The grain size is the value measured for the crystals included in the measurement region based on the assumption that the shapes of the crystals are circles. The standard deviation of the grain size was calculated from the distribution of the grain sizes of the crystals (diameters when the crystal areas are assumed to be circles) included in a measurement region of about 5000 µm² or more (the entire region of the barrier layer in the thickness direction was used as the measurement region) obtained by connecting a plurality of images acquired by the crystal analysis using EBSD, after removing the regions with a CI value below 0.1. The area average grain size R2 of the barrier layer was measured at a position 3 cm away from the measurement position of the area average grain size R1.

### (Measurement Apparatus)

A Schottky field emission scanning electron microscope equipped with an EBSD detector (from TSL Solutions K.K.) was used as the apparatus.

### (Pre-Processing)

As pre-processing, the barrier layer was cut in the direction perpendicular to the rolling direction (RD) to obtain a cross section. The rolling direction of the barrier layer is a direction in which linear rolling marks extend when the glossy surface of the barrier layer is observed with a metallurgical microscope. A specific procedure was as follows: Initially, the barrier layer for use as a sample was cut into 5 mm (direction perpendicular to the rolling direction) × 10 mm (rolling direction) with a trimming razor blade and then embedded in resin. Next, using the trimming razor blade, the barrier layer was cut together with the resin in the direction perpendicular to the rolling direction of the barrier layer and perpendicular to the surface of the barrier layer, to expose a cross section of the barrier layer. Next, the obtained cross section was trimmed using a microtome (ultramicrotome from Leica Microsystems). This trimming was performed by using the microtome to cut the cross section together with the embedding resin by about 1 mm in the direction perpendicular to the cross section, in order to reduce mechanical strain of the cross-sectional shape. Next, using an ion milling apparatus (from Hitachi High-Technologies Corporation), the cross section was irradiated with a broad argon beam in the direction perpendicular to the cross section, at a protrusion width of 50 µm and a voltage of 6 kV for 4 hours, to prepare a measurement cross section. This operation is to precisely expose the cross section of the barrier layer, so as to minimize the mechanical damage into the crystal structure occurred in the previous step. In the present disclosure, the "direction perpendicular" when cutting the aluminum alloy foil may include an error of about 10°, because the cutting is performed while observing under a stereomicroscope. Specifically, the direction perpendicular to the rolling direction includes a tolerance of 80 to 100° with respect to the rolling direction, and the direction perpendicular to the surface includes a tolerance of 80 to 100° with respect to the surface.

### (SEM Conditions)

The conditions for the scanning electron microscope (SEM) used in EBSD were as follows:
Observation magnification: 2000 times (the observation magnification standard for imaging was Polaroid 545)
Acceleration voltage: 15 kV
Working distance: 15 mm
Sample tilt angle: 70°

### (EBSD Conditions)

The conditions for the crystal analysis using EBSD were as follows:
Step size: 150 nm

### Analysis conditions:

The crystal orientation analysis software OIM (Ver 7.3) from TSL Solutions K.K. was used to perform the following analysis.

A plurality of images were connected to obtain a measurement region of about 5000 µm² or more. Here, the region from the center to both edges of the barrier layer in the thickness direction was used as the measurement region. Any portion of the cross section where the resin was attached or where the acid resistance film was present was excluded from the measurement region.

The CI value was set to 0.1 or more, the grain boundary condition was set to 0.5 degrees or more, and the minimum grain size was set to 3 steps or more.

After the images were connected, a pole figure was observed.

When the center of the pole figure was displaced 10° or more, the crystal data was rotated to adjust the symmetry. A pole figure to be used here for reference was measured from the sample surface by XRD. When obtaining a pole figure from the surface by EBSD, the sample surface was subjected to mechanical polishing, flat milling, electropolishing, or the like in order to eliminate the mechanical influence on the crystal structure of the sample surface, and then subjected to wide-area measurement. Then, the pole figure obtained in the surface direction was rotated 90° so as to be the same as that obtained in the same orientation as the orientation of the pole figure obtained from the cross section of the sample of interest. This pole figure was used for reference.

Data whose CI value (Confidence Index: CI value) defined by the crystal orientation analysis software OIM (Ver 7.3) from TSL Solutions K.K. was below 0.1 was excluded, and then the analysis was performed. In this manner, data based on the resin used for the pre-processing that was present on the front and back surfaces of the sample, grain boundaries present in the cross section, or amorphous portions could be excluded.

### <Measurement of Young's Modulus of Outer Package Film>

The Young's modulus of each outer package film was measured by the following method. The results are shown in Table 1A.
In accordance with JIS K6251:2017, an S-S curve in the TD direction of the outer package film was acquired under the measurement conditions shown below, and the Young's modulus (MPa) was calculated from the maximum value of the slope of the S-S curve.

### (Measurement Conditions)

A tensile testing machine (Shimadzu Autograph AG-X Plus) was used.
Specimen shape: dumbbell No. 7
Specimen width: 2 mm
Specimen length: 35 mm
Specimen thickness: measured with a thickness gauge
Gauge length: 20 mm
Tensile speed: 50 mm/min
Test environment: 23 ± 5°C, 50 ± 30% RH
Number of measurements: average value of three measurements

### <Thermal Shock Test>

Each of the outer package films produced in the examples and comparative examples was cut into a rectangular shape having a size of 360 mm in MD × 160 mm in TD. As the lids of the outer packaging, lids made of polypropylene having a cuboid shape (100 mm in length × 30 mm in width × 5 mm in thickness) were provided in Comparative Examples 1A and 2A, and Examples 1A and 2A. In Example 3A, lids (100 mm in length × 30 mm in width × 5 mm in thickness) in which the periphery (the periphery of the thickness portion) of a lid main body made of aluminum having a cuboid shape (98 mm in length × 28 mm in width × 5 mm in thickness) was covered with a cover made of polypropylene (PP) were provided. In Example 4A, lids (100 mm in length × 30 mm in width × 5 mm in thickness) in which the periphery (the periphery of the thickness portion) of a lid main body made of aluminum having a cuboid shape (98 mm in length × 28 mm in width × 5 mm in thickness) was covered with a cover made of maleic anhydride-modified polypropylene (PPa) were provided. Additionally, a block made of aluminum having a cuboid shape (140 mm in length × 98 mm in width × 28 mm in thickness) was provided as a simulated electrode assembly.

Next, as shown in the schematic view of FIG. 1, the lids were disposed on both sides of the electrode assembly in the length direction, the resulting structure was wrapped with the outer package film, and the position where the heat-sealable resin layers of the outer package film faced each other (first seal portion 70) and the position where the heat-sealable resin layer of the outer package film and the lid were in contact with each other (second seal portion 80) were each heat-sealed using a heat seal bar, thus obtaining a simulated electrical storage device. The simulated electric storage device did not have the electrode terminals as shown in FIG. 1. The seal width of the position where the heat-sealable resin layers of the outer package film faced each other (first seal portion 70) was 10 mm. The seal width of the position where the heat-sealable resin layer of the outer package film and the lid were in contact with each other (second seal portion 80) was the thickness of the lid (5 mm). The heat seal conditions (temperature, surface pressure, and time) for the second seal portion 80 were 180°C, 0.60 MPa, and a duration of 3 seconds in Comparative Example 1A; 180°C, 1.20 MPa, and a duration of 5 seconds in Comparative Example 2A and Examples 1A to 3A; 180°C, 0.60 MPa, and a duration of 7 seconds in Example 4A. In all cases, the conditions were set so that the ratio of "(the thickness of the heat-sealable resin layer at the position where the heat-sealable resin layer was heat-sealed to the lid)/(the thickness of the heat-sealable resin layer at the position where the heat-sealable resin layer was not heat-sealed to the lid)" became 20 to 80%. The conditions in which the thickness of the heat-sealable resin layer becomes 20% or more and 80% or less can be adjusted, for example, by setting the temperature during heat sealing to about 160 to 240°C, the surface pressure to about 0.2 to 1.5 MPa, and the heat sealing time to about 1 to 12 seconds.

Each of the resulting simulated electrical storage devices was subjected to a thermal shock test in which one cycle consisting of standing in a -30°C environment for 30 minutes and then standing in an 80°C environment for 30 minutes was repeated 800 cycles, to evaluate whether the formation of a crack in the seal portion of the outer package film to the lid (the surface layer of the outer package film) was inhibited when the electrical storage device was repeatedly exposed to temperature changes between high and low temperatures. The results are shown in Table 1A.

According to the results of the thermal shock test shown in Table 1A, a crack was formed in the seal portion of the outer package film to the lid in the electrical storage devices of Comparative Examples 1A and 2A. On the other hand, although a fine crack was formed in the seal portion of the outer package film to the lid in the electrical storage device of Example 1A, the formation of a crack in the seal portion of the outer package film to the lid was evaluated as being inhibited. In each of the electrical storage devices of Examples 2A to 4A, no crack was formed in the seal portion of the outer package film to the lid, and the formation of a crack in the seal portion of the outer package film to the lid was evaluated as being particularly satisfactorily inhibited. The fine crack was a crack such that no void was observed in the barrier layer when the seal portion was observed by SEM, whereas the crack observed in Comparative Examples 1A and 2A was a crack such that a void was observed in the barrier layer when the seal portion was observed by SEM. The conditions for SEM observation were as follows: observation magnification: 1000 times, acceleration voltage: 5 kV, and working distance: 10 mm.

**[Table 1A]**

| | Electrical storage device | | | | | | |
|---|---|---|---|---|---|---|---|
| | Laminated structure of outer package film | Young's modulus (MPa) of outer package film | Material of lid | Area average grain size R1 of barrier layer (seal portion) (µm) | Area average grain size R2 of barrier layer (non-seal portion) (µm) | R1/R2 | Results of thermal shock test (800 cycles) |
| Comp. Ex.1 A | PET(12)/DL(3)/ONy(15) /AL(40)/PPa(40)/PP(40) | 4430 | PP | 4.66 | 8.81 | 53% | Crack in the outer package film |
| Comp. Ex.2 A | PET(12)/DL(3)/ONy(15) /AL(60)/PPa(40)/PP(40) | 5130 | PP | 5.12 | 10.80 | 47% | Crack in the outer package film |
| Ex.1 A | PET(12)/DL(3)/ONy(15) /AL(80)/PPa(40)/PP(40) | 6520 | PP | 6.17 | 10.80 | 57% | Fine crack in the outer package film |
| Ex.2 A | PET(12)/DL(3)/ONy(15) /SUS(60)/PPa(40)/PP(40) | 19480 | PP | 10.90 | 8.70 | 125% | No crack in the outer package film |
| Ex.3 A | PET(12)/DL(3)/ONy(15) /AL(40)/PPa(40)/PP(40) | 4430 | Lid main body (AL) | 7.90 | 10.00 | 79% | No crack in the outer package film |
| | | | Cover (PP) | | | | |
| Ex.4 A | PET(12)/DL(3)/ONy(15) /AL(40)/PPa(40)/PP(40) | 4430 | Lid main body (AL) | 9.20 | 10.70 | 86% | No crack in the outer package film |
| | | | Cover (PPa) | | | | |

In Table 1A, PET designates the polyethylene terephthalate film; DL designates the adhesive agent layer formed by dry lamination; ONy designates the stretched nylon film; AL designates the aluminum alloy film; SUS designates the stainless steel foil; PPa designates the maleic anhydride-modified polypropylene layer; and PP designates the polypropylene layer. The values of the Young's modulus, area average grain sizes R1, R2, and R1/R2 are values calculated by rounding the measured values at a digit one place lower than the numerical values shown in Table 1A.

### <Manufacture of Electrical Storage Device Outer Packaging Material>

### Comparative Example 1B

As a base material layer, a laminate of a biaxially stretched polyethylene terephthalate (PET) film (thickness: 12 µm) and a stretched nylon (ONy) film (thickness: 15 µm) bonded with an adhesive agent layer (formed of a two-component curable urethane adhesive and having a thickness of 3 µm after curing) was provided. As a barrier layer, an aluminum foil (JIS H4160:1994 A8079H-O (thickness: 60 µm)) was provided. Both surfaces of the aluminum foil had been subjected to chemical conversion treatment. The chemical conversion treatment of the aluminum foil was performed by applying a treatment solution containing a phenol resin, a chromium fluoride compound, and phosphoric acid to both surfaces of the aluminum foil by roll coating such that the amount of chromium applied was 10 mg/m² (dry mass), and baking.

Next, the base material layer and the barrier layer were bonded with the adhesive agent layer (thickness: 3 µm) by dry lamination using the two-component curable urethane adhesive, to prepare a laminate sequentially having the base material layer/the adhesive agent layer/the barrier layer.

Next, maleic anhydride-modified polypropylene for forming an adhesive layer (thickness: 40 µm) and random polypropylene for forming a heat-sealable resin layer (thickness: 40 µm) were co-extruded on the barrier layer of each laminate obtained above to laminate the adhesive layer/the heat-sealable resin layer on the barrier layer. Next, the resulting laminate was aged and heated to obtain an electrical storage device outer packaging material formed of a laminate sequentially having the base material layer/the adhesive agent layer/the barrier layer/the adhesive layer/the heat-sealable resin layer.

### Example 1B

An electrical storage device outer packaging material formed of a laminate sequentially having the base material layer/the adhesive agent layer/the barrier layer/the adhesive layer/the heat-sealable resin layer was obtained as in Comparative Example 1B, except that an aluminum foil (JIS H4160:1994 A8079H-O (thickness: 80 µm)) was used as the barrier layer.

### Example 2B

An electrical storage device outer packaging material formed of a laminate sequentially having the base material layer/the adhesive agent layer/the barrier layer/the adhesive layer/the heat-sealable resin layer was obtained as in Comparative Example 1B, except that a stainless steel foil (JIS G4303 SUS304 (thickness: 60 µm)) was used as the barrier layer.

### <Measurement of Area Average Grain Sizes R1 and R2 of Barrier Layer>

A simulated electrical storage device was produced in the same manner as the simulated electrical storage device produced in <Thermal Shock Test> described below. Next, from the simulated electrical storage device, the barrier layer at the position (seal portion (second seal portion)) where the heat-sealable resin layer of the electrical storage device outer packaging material was heat-sealed to the polypropylene sheet (the lid made of polypropylene) and the barrier layer at the position where the heat-sealable resin layer of the electrical storage device outer packaging material was not heat-sealed (non-seal portion) were obtained, and crystal analysis using EBSD was performed on each barrier layer to measure the area average grain size R1 or R2 of the barrier layer. The measurement method was specifically as follows.

Crystal analysis using EBSD was performed on a cross section of each barrier layer in the direction perpendicular to the rolling direction to measure the area average grain size of the barrier layer. Details of the measurement conditions were as follows. The measurement results are shown in Table 1B. The area average grain size is the diameter when the area calculated by [(measurement region - regions with a CI value below 0.1)/number of crystals] is assumed to be a circle, and is the area average grain size of crystals included in a measurement region of about 5000 µm² or more obtained by connecting a plurality of images acquired by the crystal analysis using EBSD. The maximum grain size is the value measured for the largest crystal of the crystals included in the measurement region based on the assumption that the shapes of the crystals are circles. The standard deviation of the grain size was calculated from the distribution of the grain sizes of the crystals (diameters when the crystal areas are assumed to be circles) included in a measurement region of about 5000 µm² or more obtained by connecting a plurality of images acquired by the crystal analysis using EBSD, after removing the regions with a CI value below 0.1.

### (Measurement Apparatus)

A Schottky field emission scanning electron microscope equipped with an EBSD detector (from TSL Solutions K.K.) was used as the apparatus.

### (Pre-Processing)

As pre-processing, the barrier layer was cut in the direction perpendicular to the rolling direction (RD) to obtain a cross section. The rolling direction of the barrier layer is a direction in which linear rolling marks extend when the glossy surface of the barrier layer is observed with a metallurgical microscope. A specific procedure was as follows: Initially, the barrier layer for use as a sample was cut into 5 mm (direction perpendicular to the rolling direction) × 10 mm (rolling direction) with a trimming razor blade and then embedded in resin. Next, using the trimming razor blade, the barrier layer was cut together with the resin in the direction perpendicular to the rolling direction of the barrier layer and perpendicular to the surface of the barrier layer, to expose a cross section of the barrier layer. Next, the obtained cross section was trimmed using a microtome (ultramicrotome from Leica Microsystems). This trimming was performed by using the microtome to cut the cross section together with the embedding resin by about 1 mm in the direction perpendicular to the cross section, in order to reduce mechanical strain of the cross-sectional shape. Next, using an ion milling apparatus (from Hitachi High-Technologies Corporation), the cross section was irradiated with a broad argon beam in the direction perpendicular to the cross section, at a protrusion width of 50 µm and a voltage of 6 kV for 4 hours, to prepare a measurement cross section. This operation is to precisely expose the cross section of the barrier layer, so as to minimize the mechanical damage into the crystal structure occurred in the previous step. In the present disclosure, the "direction perpendicular" when cutting the aluminum alloy foil may include an error of about 10°, because the cutting is performed while observing under a stereomicroscope. Specifically, the direction perpendicular to the rolling direction includes a tolerance of 80 to 100° with respect to the rolling direction, and the direction perpendicular to the surface includes a tolerance of 80 to 100° with respect to the surface.

### (SEM Conditions)

The conditions for the scanning electron microscope (SEM) used in EBSD were as follows:
Observation magnification: 2000 times (the observation magnification standard for imaging was Polaroid 545)
Acceleration voltage: 15 kV
Working distance: 15 mm
Sample tilt angle: 70°

### (EBSD Conditions)

The conditions for the crystal analysis using EBSD were as follows:
Step size: 150 nm

### Analysis conditions:

The crystal orientation analysis software OIM (Ver 7.3) from TSL Solutions K.K. was used to perform the following analysis.

A plurality of images were connected to obtain a measurement region of about 5000 µm² or more. Here, the region from the center to both edges of the barrier layer in the thickness direction was used as the measurement region. Any portion of the cross section where the resin was attached or where the acid resistance film was present was excluded from the measurement region.

The CI value was set to 0.1 or more, the grain boundary condition was set to 0.5 degrees or more, and the minimum grain size was set to 3 steps or more.

After the images were connected, a pole figure was observed.

When the center of the pole figure was displaced 10° or more, the crystal data was rotated to adjust the symmetry. A pole figure to be used here for reference was measured from the sample surface by XRD. When obtaining a pole figure from the surface by EBSD, the sample surface was subjected to mechanical polishing, flat milling, electropolishing, or the like in order to eliminate the mechanical influence on the crystal structure of the sample surface, and then subjected to wide-area measurement. Then, the pole figure obtained in the surface direction was rotated 90° so as to be the same as that obtained in the same orientation as the orientation of the pole figure obtained from the cross section of the sample of interest. This pole figure was used for reference.

Data whose CI value (Confidence Index: CI value) defined by the crystal orientation analysis software OIM (Ver 7.3) from TSL Solutions K.K. was below 0.1 was excluded, and then the analysis was performed. In this manner, data based on the resin used for the pre-processing that was present on the front and back surfaces of the sample, grain boundaries present in the cross section, or amorphous portions could be excluded.

### <Measurement of Young's Modulus of Electrical Storage Device Outer Packaging Material>

The Young's modulus of each electrical storage device outer packaging material was measured by the following method. The results are shown in Table 1B.

In accordance with JIS K6251:2017, an S-S curve in the TD direction of the adhesive film was acquired under the measurement conditions shown below, and the Young's modulus (MPa) was calculated from the maximum value of the slope of the S-S curve.

### (Measurement Conditions)

A tensile testing machine (Shimadzu Autograph AG-X Plus) was used.
Specimen shape: dumbbell No. 7
Specimen width: 2 mm
Specimen length: 35 mm
Specimen thickness: measured with a thickness gauge
Gauge length: 20 mm
Tensile speed: 50 mm/min
Test environment: 23 ± 5°C, 50 ± 30% RH
Number of measurements: average value of three measurements

### <Thermal Shock Test>

Each of the electrical storage device outer packaging materials produced in the examples and comparative examples was cut into a rectangular shape having a size of 360 mm in MD × 160 mm in TD. As the lids of the outer packaging, lids made of polypropylene (polypropylene sheet) having a cuboid shape (100 mm in length × 30 mm in width × 5 mm in thickness) were provided. Additionally, a block made of aluminum having a cuboid shape (140 mm in length × 98 mm in width × 28 mm in thickness) was provided as a simulated electrode assembly.

Next, as shown in the schematic view of FIG. 1, the lids were disposed on both sides of the electrode assembly in the length direction, the resulting structure was wrapped with the electrical storage device outer packaging material, and the position where the heat-sealable resin layers of the electrical storage device outer packaging material faced each other (first seal portion 70) and the position where the heat-sealable resin layer of the electrical storage device outer packaging material and the lid were in contact with each other (second seal portion 80) were each heat-sealed using a heat seal bar, thus obtaining a simulated electrical storage device. The simulated electric storage device did not have the electrode terminals as shown in FIG. 1. The seal width of the position where the heat-sealable resin layers of the electrical storage device outer packaging material faced each other (first seal portion 70) was 10 mm. The seal width of the position where the heat-sealable resin layer of the electrical storage device outer packaging material and the lid were in contact with each other (second seal portion 80) was the thickness of the lid (5 mm). The heat seal conditions (temperature, surface pressure, and time) for the second seal portion 80 were 180°C, 1.20 MPa, and a duration of 5 seconds, respectively. The heat seal conditions were set so that the ratio of "(the thickness of the heat-sealable resin layer at the position where the heat-sealable resin layer was heat-sealed to the lid)/(the thickness of the heat-sealable resin layer at the position where the heat-sealable resin layer was not heat-sealed to the lid)" became 20 to 80%.

Each of the resulting simulated electrical storage devices was subjected to a thermal shock test in which one cycle consisting of standing in a -30°C environment for 30 minutes and then standing in an 80°C environment for 30 minutes was repeated 800 cycles, to evaluate whether the formation of a crack in the seal portion between the electrical storage device outer packaging material and the lid (the surface layer of the electrical storage device outer packaging material) was inhibited when the electrical storage device was repeatedly exposed to temperature changes between high and low temperatures. The results are shown in Table 1B.

According to the results of the thermal shock test shown in Table 1B, a crack was formed in the seal portion between the electrical storage device outer packaging material and the lid in the electrical storage device of Comparative Example 1B. On the other hand, although a fine crack was formed in the seal portion between the electrical storage device outer packaging material and the lid in the electrical storage device of Example 1B, the formation of a crack in the seal portion between the electrical storage device outer packaging material and the lid was evaluated as being inhibited. In the electrical storage device of Examples 2B, no crack was formed in the seal portion between the electrical storage device outer packaging material and the lid, and the formation of a crack in the seal portion between the electrical storage device outer packaging material and the lid was evaluated as being particularly satisfactorily inhibited. The fine crack was a crack such that no void was observed in the barrier layer when the seal portion was observed by SEM, whereas the crack observed in Comparative Example 1B was a crack such that a void was observed in the barrier layer when the seal portion was observed by SEM. The conditions for SEM observation were as follows: observation magnification: 1000 times, acceleration voltage: 5 kV, and working distance: 10 mm.

**[Table 1B]**

| | Electrical storage device | | | | | | |
|---|---|---|---|---|---|---|---|
| | Laminated structure of electrical storage device outer packaging material | Young's modulus (MPa) of electrical storage device outer packaging material | Material of lid | Area average grain size R1 of barrier layer (seal portion) (µm) | Area average grain size R2 of barrier layer (non-seal portion) (µm) | R1/R2 | Results of thermal shock test (800 cycles) |
| Comp. Ex. 1 B | PET(12)/DL(3)/ONy(15) /AL(60)/PPa(40)/PP(40) | 5130 | PP | 5.12 | 10.80 | 47% | Crack in the electrical storage device outer packaging material |
| Ex. 1 B | PET(12)/DL(3)/ONy(15) / AL(80)/PPa(40)/PP(40) | 6520 | PP | 6.17 | 10.80 | 57% | Fine crack in the electrical storage device outer packaging material |
| Ex 2 B | PET(12)/DL(3)/ONy(15) /SUS(60)/PPa(40)/PP(40) | 19480 | PP | 10.90 | 8.70 | 125% | No crack in the electrical storage device outer packaging material |

In Table 1B, PET designates the polyethylene terephthalate film; DL designates the adhesive agent layer formed by dry lamination; ONy designates the stretched nylon film; AL designates the aluminum alloy film; SUS designates the stainless steel foil; PPa designates the maleic anhydride-modified polypropylene layer; and PP designates the polypropylene layer. The values of the Young's modulus, area average grain sizes R1, R2, and R1/R2 are values calculated by rounding the measured values at a digit one place lower than the numerical values shown in Table 1B.

As described above, the present disclosure provides the following aspects of the invention.

Item 1A. An electrical storage device comprising:
an electrode assembly; and
an outer packaging that seals the electrode assembly,
wherein the outer packaging comprises:
   an outer package film that wraps the electrode assembly; and
   a lid that seals the electrode assembly together with the outer package film,
   wherein the outer package film comprises a laminate including at least a barrier layer and a heat-sealable resin layer,
   wherein, in the barrier layer, a ratio (R1/R2) of area average grain size R1 (µm) to area average grain size R2 (µm) is 55% or more,
   wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and
   wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed.

Item 2A. The electrical storage device according to Item 1A, wherein the barrier layer is formed of stainless steel, a steel sheet, or an aluminum alloy.

Item 3A. The electrical storage device according to Item 1A or 2A, wherein the lid includes a lid main body and a cover that joins the lid main body and the outer package film, and
wherein the cover contains a resin.

Item 4A. The electrical storage device according to any one of Items 1A to 3A, further comprising an adhesive layer between the barrier layer and the heat-sealable resin layer.

Item 5A. The electrical storage device according to any one of Items 1A to 4A, further comprising a base material layer on a side of the barrier layer opposite to the heat-sealable resin layer.

Item 6A. The electrical storage device according to Item 5A, further comprising an adhesive agent layer between the base material layer and the barrier layer.

Item 7A. The electrical storage device according to any one of Items 1A to 6A, wherein the outer package film has a Young's modulus of 6000 MPa or more.

Item 8A. A method for manufacturing an electrical storage device,
the electrical storage device comprising:
an electrode assembly; and
an outer packaging that seals the electrode assembly,
wherein the outer packaging comprises:
   an outer package film that wraps the electrode assembly; and
   a lid that seals the electrode assembly together with the outer package film,
   wherein the outer package film comprises a laminate including at least a barrier layer and a heat-sealable resin layer,
   wherein, in the barrier layer, a ratio (R1/R2) of area average grain size R1 (µm) to area average grain size R2 (µm) is 55% or more,
   wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and
   wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed,
   the method comprising the step of sealing the electrode assembly with the outer packaging.

Furthermore, as described above, the present disclosure provides the following aspects of the invention.

Item 1B. An electrical storage device outer packaging material comprising a laminate including at least a barrier layer and a heat-sealable resin layer,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed.

Item 2B. The electrical storage device outer packaging material according to Item 1B, wherein the barrier layer is formed of stainless steel, a steel sheet, or an aluminum alloy.

Item 3B. The electrical storage device outer packaging material according to Item 1B or 2B, further comprising an adhesive layer between the barrier layer and the heat-sealable resin layer.

Item 4B. The electrical storage device outer packaging material according to any one of Items 1B to 3B, further comprising a base material layer on a side of the barrier layer opposite to the heat-sealable resin layer.

Item 5B. The electrical storage device outer packaging material according to Item 4B, further comprising an adhesive agent layer between the base material layer and the barrier layer.

Item 6B. The electrical storage device outer packaging material according to any one of Items 1B to 5B, wherein the electrical storage device outer packaging material has a Young's modulus of 6000 MPa or more.

Item 7B. A method for manufacturing an electrical storage device outer packaging material, the method comprising the step of:
obtaining a laminate in which at least a barrier layer and a heat-sealable resin layer are laminated,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed.

Item 8B. An electrical storage device comprising an electrical storage device element comprising at least a positive electrode, a negative electrode, and an electrolyte, wherein the electrical storage device element is housed in a packaging formed of the electrical storage device outer packaging material according to any one of Items 1B to 6B.

### Reference Signs List

1 Base material layer
2 Adhesive agent layer
3 Barrier layer
4 Heat-sealable resin layer
5 Adhesive layer
6 Surface coating layer
10 Electrical storage device
20 Electrode assembly
30 Electrode terminal
40 Outer packaging
50 Outer package film (electrical storage device outer packaging material)
51 Base material layer
52 Barrier layer
53 Heat-sealable resin layer
54 Adhesive agent layer
55 Adhesive layer
60 Lid
61 Lid main body
62 Cover
70 First seal portion
80 Second seal portion

## Claims

1. An electrical storage device comprising:
an electrode assembly; and
an outer packaging that seals the electrode assembly,
wherein the outer packaging comprises:
an outer package film that wraps the electrode assembly; and
a lid that seals the electrode assembly together with the outer package film, wherein the outer package film comprises a laminate including at least a barrier layer and a heat-sealable resin layer,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed.

2. The electrical storage device according to claim 1, wherein the barrier layer is formed of stainless steel, a steel sheet, or an aluminum alloy.

3. The electrical storage device according to claim 1 or 2, wherein the lid includes a lid main body and a cover that joins the lid main body and the outer package film, and
wherein the cover contains a resin.

4. The electrical storage device according to claim 1 or 2, further comprising an adhesive layer between the barrier layer and the heat-sealable resin layer.

5. The electrical storage device according to claim 1 or 2, further comprising a base material layer on a side of the barrier layer opposite to the heat-sealable resin layer.

6. The electrical storage device according to claim 5, further comprising an adhesive agent layer between the base material layer and the barrier layer.

7. The electrical storage device according to claim 1 or 2, wherein the outer package film has a Young's modulus of 6000 MPa or more.

8. A method for manufacturing an electrical storage device,
the electrical storage device comprising:
an electrode assembly; and
an outer packaging that seals the electrode assembly,
wherein the outer packaging comprises:
an outer package film that wraps the electrode assembly; and
a lid that seals the electrode assembly together with the outer package film,
wherein the outer package film comprises a laminate including at least a barrier layer and a heat-sealable resin layer,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the outer package film is heat-sealed to the lid, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the outer package film is not heat-sealed,
the method comprising the step of sealing the electrode assembly with the outer packaging.

9. An electrical storage device outer packaging material comprising a laminate including at least a barrier layer and a heat-sealable resin layer,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed.

10. The electrical storage device outer packaging material according to claim 9, wherein the barrier layer is formed of stainless steel, a steel sheet, or an aluminum alloy.

11. The electrical storage device outer packaging material according to claim 9 or 10, further comprising an adhesive layer between the barrier layer and the heat-sealable resin layer.

12. The electrical storage device outer packaging material according to claim 9 or 10, further comprising a base material layer on a side of the barrier layer opposite to the heat-sealable resin layer.

13. The electrical storage device outer packaging material according to claim 12, further comprising an adhesive agent layer between the base material layer and the barrier layer.

14. The electrical storage device outer packaging material according to claim 9 or 10, wherein the electrical storage device outer packaging material has a Young's modulus of 6000 MPa or more.

15. A method for manufacturing an electrical storage device outer packaging material, the method comprising the step of:
obtaining a laminate in which at least a barrier layer and a heat-sealable resin layer are laminated,
wherein, in the barrier layer, a ratio (R1/R2) of area average grain size R1 (µm) to area average grain size R2 (µm) is 55% or more,
wherein the area average grain size R1 (µm) is an area average grain size (µm) obtained by performing crystal analysis using EBSD on a cross section obtained by cutting the barrier layer in a direction that is perpendicular to a rolling direction of the barrier layer and perpendicular to a surface of the barrier layer, at a position where the heat-sealable resin layer of the electrical storage device outer packaging material and a polypropylene sheet are heat-sealed under conditions in which a thickness of the heat-sealable resin layer becomes 20% or more and 80% or less, and
wherein the area average grain size R2 (µm) is an area average grain size (µm) obtained by performing crystal analysis using EBSD on a cross section obtained by cutting the barrier layer in the direction that is perpendicular to the rolling direction of the barrier layer and perpendicular to the surface of the barrier layer, at a position where the heat-sealable resin layer of the electrical storage device outer packaging material and the polypropylene sheet are not heat-sealed.

16. An electrical storage device comprising an electrical storage device element comprising at least a positive electrode, a negative electrode, and an electrolyte, wherein the electrical storage device element is housed in a packaging formed of the electrical storage device outer packaging material according to claim 9 or 10.
